# EUROPEAN PATENT APPLICATION

(11) **EP 3 748 749 A1**
(43) Date of publication of application: **09.12.2020**
(21) Application number: 18904159.3
(22) Date of filing: 31.01.2018
(51) Int. Cl.: H01M 8/02, H01M 8/04

(54) **FUEL CELL AND CELL UNIT THEREOF, AND CELL STACK STRUCTURE BODY**

(71) Applicant: SHANGHAI SUNBRIDGE POWER TECHNOLOGIES CO., LTD, Shanghai 201806 (CN)
(72) Inventor: CHENG, Jianhua, Shanghai 201102 (CN)
(74) Representative: EP&C
(86) International application number: PCT/CN2018/074657
(87) International publication number: WO 2019/148338

(57) **Abstract**

The present invention provides a fuel cell and a cell unit thereof, and a cell stack structure body. The cell unit comprises: a first separator and a second separator opposite to each other, as well as a membrane electrode assembly laminated between the first and the second separators. The cell unit has a plurality of openings for fuel fluid, a plurality of openings for cooling medium, and a plurality of openings for oxidizing fluid; these openings pass through the first separator, the second separator, and the membrane electrode assembly from a surface extending from the cell unit, wherein at least one opening for fuel fluid, at least one opening for cooling medium, and at least one opening for oxidizing fluid are distributed in a central region of the cell unit.

## Description

### Field of the Invention

The present invention relates to a cell unit of a fuel cell and a cell stack structure body, having high output density and high capacity.

### Description of the Related Art

The fuel cell is a device that generates power by a chemical reaction between hydrogen and oxygen via an electrolyte. Owing to its potential for reducing the environmental burdens, the implementation and the widespread use of the fuel cells are receiving much attention. Also, depending on the types of electrolyte in use, the fuel cells have different temperatures for generating power and different characteristics. Mainly, the fuel cells are classified according to the types of electrolyte being used. The fuel cells are broadly classified into 4 types, namely; polymer electrolyte fuel cell (PEFC), solid oxide fuel cell (SOFC), phosphoric acid (PAFC) and molten carbonate fuel cell (MCFC).

For example, the polymer electrolyte fuel cell (PEFC) is provided with a membrane electrode assembly (MEA) that arranges an anode electrode on one side of the polymeric ion exchange membrane and a cathode electrode on the other side. MEA is sandwiched in between a pair of separators to constitute a cell. The operating temperature of PEFC is low ranging from 60 to 90 degrees centigrade. The advantage of using PEFC is in that it can exhibit a good output efficiency at a small device size. Mostly, PEFC is being utilized in a fuel cell vehicle. PEFC is also utilized in a solar battery, a backup battery for remote antenna, and a drone used in depopulated area.

A structure in which the electrolyte membrane is sandwiched by a positive electrode plate and a negative electrode plate is known as a cell. There are many minute channels formed on the positive electrode (the oxygen electrode) and the negative electrode (the hydrogen electrode) of the cell. The power generating reaction takes place when the externally supplied oxygen and hydrogen pass through these channels that sandwich the electrolyte membrane. Since the output of a single cell is limited, therefore, many cells are piled up to constitute a single package so that the required output may be obtained. This is known as the stacked-type fuel cell.

The fuel cell desires to have a high output density and a high capacity (high energy density). That is, to generate the fuel cell's power efficiently, an individual cell that constitutes the fuel cell stack must generate power efficiently. For this purpose, the fuel cell needs be designed so that various fluids such as hydrogen, cooling water and air are supplied to each cell uniformly. The output of a fuel cell is proportional to the membrane area and is not proportional to the fuel cell volume. In attempt to achieve a high-output and a small-sized stacked fuel cell, it is most effective to increase the cell area (catalyst reaction area) and to reduce the pitch for stacking the cells. The power generation current of the stack is effectively increased by enlarging the catalyst reaction area. Also, the output density of the fuel cell is increased by reducing the pitch.

However, just by enlarging the cell area and reducing the pitch for stacking the cells it would result in the increase in the pressure loss when various fluids such as hydrogen, cooling water and air pass through the inner planes of the cells. The excessive pressure loss will lead to a drop in the power generation efficiency. Some measures are needed to reduce the pressure loss as much as possible.

Furthermore, the cell area could not have been increased by using the conventional technology due to the peripheral arrangement of the manifolds and the crossing of the various flows that have resulted in the flow resistances of the fuel fluid, the cooling medium and the oxidizing fluid.

According to the fuel cells disclosed in the non-patent document 1 and the patent document 2, they lack in flexibility for extending the catalyst reaction area within 2 dimensions since the manifolds are arranged at a periphery of the catalyst layer. Also, regarding the fuel cell for vehicle disclosed in the non-patent document 1, its flow channel distribution is intersecting 3 dimensionally, therefore, the enlargement of the catalyst reaction area is even more difficult for this fuel cell. Also, according to the fuel cell disclosed in patent document 1, since a gutter of the channel formed on the separator is deep, therefore, a local strain stress was applied on a layer having power generation function, that contacts a corner of the channel gutter. This has caused a decline of durability. There is a disadvantage of significant problem affecting the fuel cell lifetime.

The patent document 3 discloses a fuel cell having low aspect ratio at with direction, and providing a plurality of fuel fluid channel openings, cooling medium channel openings and oxidizing fluid channel openings at two outer peripheries facing the MEA. Although this type of design may be advantageous in enlarging the catalyst reaction area 2 dimensionally, however, when one continues to enlarge the area in the width direction, the pressure loss of various fluids that passes through the inner planes of the cell unit still remains to be large to an unacceptable extent.

The number of cells for stacking could not have been increased by using the conventional technology because a high pressure of the gases supplied to the manifolds, and the flow resistances of the fuel fluid, the cooling medium and the oxidizing gas need be dealt with. According to the conventional problems, the fuel cell stack for vehicle, due to its space restriction, the increase in the number of cells for stacking is limited.

### Prior Art Documents

Patent Document 1: Japanese Laid-open Application Publication No. 2017-147134
Patent Document 2: Japanese Laid-open Application Publication No. 2016-096015
Patent Document 3: International Patent Publication No. WO2014/136965

Non-patent Document 1: Product Information for 2016 Toyota Sedan type fuel cell powered vehicle MIRAI

### Contents of the Invention

The present invention relates to fuel cell, cell unit thereof, and cell stack structure body, having high output density and high capacity.

According to one aspect of the present invention, a cell unit comprising: a first separator and a second separator opposite to each other; and a membrane electrode assembly laminated between the first and the second separators; wherein the cell unit includes a plurality of fuel fluid openings, a plurality of cooling medium openings, and a plurality of oxidizing fluid openings of the first separator, the second separator and the membrane electrode assembly, that pass through an extension plane of the cell unit; wherein at least one of the fuel fluid openings, at least one of the cooling medium openings, and at least one of the oxidizing fluid openings, are arranged at a center area of the cell unit.

According to the embodiments of the present invention, the cell unit comprises the plurality of fuel fluid openings, the plurality of cooling medium openings, and the plurality of oxidizing fluid openings configured with a plurality of basic units periodically repeated throughout the cell unit or periodically repeated with fluctuation to some extent, and that include an edge structure for terminating the periodic repetition of the basic units at edge portions other than the center area.

According to the embodiments of the present invention, the cell unit comprises the fuel fluid openings, the cooling medium openings, and the oxidizing fluid openings that are provided with their respective supply openings and exhaust openings.

According to the embodiments of the present invention, the basic unit includes at least two fuel fluid openings, at least two cooling medium openings, and at least two oxidizing fluid openings.

According to the embodiments of the present invention, the basic units include the same or the different shapes, positions, and sizes of the various fluid openings, or their combinations, as follows: the shapes, positions, and sizes of the fuel fluid openings are the same or different, or their combinations; the shapes, positions, and sizes of the cooling medium openings are the same or different, or their combinations; and the shapes, the position, and the size of the oxidizing fluid openings are the same or different, or their combinations.

According to the embodiments of the present invention, the cell unit comprises the basic unit is a unit having a minimum repeating arrangement periodicity of pattern of the openings, for which a pattern of openings is formed by a two-dimensional Bravais lattice arrangement.

According to the embodiments of the present invention, the cell unit comprises at least two of the fuel fluid openings, at least two of the cooling medium openings, and at least two of the oxidizing fluid openings, that are provided with their respective supply openings and exhaust openings.

According to the embodiments of the present invention, the cell unit comprises at least two fuel fluid openings including a multiple fuel fluid openings or a partial fuel fluid openings; at least two cooling medium openings including a multiple cooling medium openings or a partial cooling medium openings; and at least two oxidizing fluid openings including a multiple oxidizing fluid openings or a partial oxidizing fluid openings.

According to the embodiments of the present invention, the cell unit comprises a minimum power generating element including approximately one quarter of the fuel fluid supply opening, approximately one quarter of the fuel fluid exhaust opening, approximately one quarter of the oxidizing fluid supply opening, approximately one quarter of the oxidizing fluid exhaust opening, approximately half of the cooling medium supply opening, and approximately half of the cooling medium exhaust opening.

According to the embodiments of the present invention, the cell unit includes the basic unit and the minimum power generating unit are geometrically similar.

According to the embodiments of the present invention, the cell unit characterized in that the supply opening and exhaust openings for the same fluid are arranged to a first row and a second row in a complementary relationship with one another, wherein the first row does not includes the supply opening and exhaust openings of the same fluid both in the same row, and wherein the second row does not include the supply opening and exhaust openings of the same fluid both in the same row.

According to the embodiments of the present invention, the first row includes the supply openings only, and the second row that includes the exhaust openings only, wherein the first row and the second row are alternately arranged in the fluid channel direction.

According to the embodiments of the present invention, the membrane electrode assembly of the cell unit comprises a first gas diffusion layer, a first catalyst layer, an electrolyte membrane, a second catalyst layer, and a second gas diffusion layer.

According to one aspect of the present invention, comprising: a cell stack structure body, wherein the cell stack structure body is stacked by the plurality of cell units, wherein the fuel fluid openings, the cooling medium openings, and the oxidizing fluid openings of the cell units are respectively piled to form respective internal common manifolds within the cell stack structure body, and wherein the internal common manifolds supply and exhaust the fuel fluid, the cooling medium and the oxidizing fluid to/from the plurality of cell units.

According to the embodiments of the present invention, the internal common manifolds are basically formed perpendicular to a plane of the plurality of cell units and/or formed at the acute inclined angles to the plane.

According to the embodiments of the present invention, the cell stack structure body which comprises the followings; a first channel, arranged inside each cell unit, for supplying fuel fluid flow; a second channel, arranged inside each cell unit, for supplying oxidizing fluid flow; and a third channel, arranged between adjacent cell units, for supplying cooling medium flow; wherein the first channel, the second channel, and the third channel are connected to their respective internal common manifolds, and wherein each cell unit is provided with a sealing material for controlling flows of the first channel, the second channel, and the third channel.

According to the embodiments of the present invention, the cell stack structure body which is formed by stacking the plurality of cell units, wherein the adjacent cell units have a pre-determined rotation angle of 0 degree or more than 0 degree.

According to the embodiments of the present invention, the cell stack structure body which is formed by stacking the plurality of cell units, wherein the fuel fluid openings, the cooling medium openings, and the oxidizing fluid openings have the same shapes and sizes, respectively, to be aligned coherently in a straight line and/or curved lines, for forming the internal common manifolds.

According to the embodiments of the present invention, the cell stack structure body formed by stacking the plurality of cell units, wherein the internal common manifolds have slight displacement in their shapes and sizes, respectively, to be aligned in a straight line and/or curved lines; for forming the internal common manifolds.

According to one aspect of the present invention, a fuel cell having the cell stack structure body, comprising: a first end plate; and a second end plate; wherein the first end plate and the second end plate have external common manifolds corresponding to the internal common manifolds, for supplying and exhausting the fuel fluid, the cooling medium and the oxidizing fluid, and for sandwiching the cell stack structure body from both sides.

According to the embodiments of the present invention, the external common manifolds include a plurality of first pipes connected to the external power generation auxiliary system, and a plurality of second pipes connected to the internal common manifolds.

According to the embodiments of the present invention, the external common manifolds have basic units corresponding to the internal common manifolds, and the edge structure for terminating the periodic repetition of the basic units.

According to the embodiments of the present invention, the plurality of first pipes are arranged along the aligned direction of the openings, wherein the plurality of first pipes are provided in parallel or semi-parallel to each other so as not to come in contact with one another.

According to the embodiments of the present invention, the fuel cell is characterized in that the plurality of second pipes are arranged along the stacking direction of the cell units, extend the internal common manifolds, and installed so as not to come in contact with one another.

According to the embodiments of the present invention, the plurality of first pipes and the plurality of the second pipes are connected perpendicular to and/or at the acute inclined angles to each other, wherein the second pipes penetrate at the center or at a vicinity of the center of the first pipes, or penetrate at the edge or near to the edge of the first pipes, or penetrate between the center or the edge of the first pipes, viewing from the cross section of the first pipes.

According to the embodiments of the present invention, wherein the second pipe increases width size of a first axis at the inner plane of the cell unit stepwisely from the first zone positioned most apart from the cell stack structure body, via the second zone, to the third zone positioned closest to the cell stack structure body. The first pipe connected to the external power generation auxiliary system for the cooling medium is set back with respect to a reference line by taking the width size of the second pipe for connecting to the internal common manifold of the fuel fluid positioned at the first zone as the reference line. The first pipe connected to the external power generation auxiliary system for the oxidizing fluid is set back with respect to a reference line by taking the second pipe for connecting to the internal common manifold of the cooling medium positioned at the second zone as the reference line.
According to the embodiments of the present invention, the edge structure of the internal common manifolds and the external common manifolds, as for the edge structure that terminates a first axis extension of the openings in the cell unit, is provided so that the cross-sectional areas of the internal common manifolds and the external common manifolds at the edge portions are half or approximately half of the cross sectional areas of the internal common manifolds and the external common manifolds at the intermediate portion; and as for the edge structure that terminates a second axis extension of the openings in the cell unit, the extension to the second axis of the openings is terminated by setting the dividing line having an integer multiple of the basic segment as a reference, based on the basic segment provided with pipes for connecting to the internal common manifolds and the internal common manifolds of the fuel fluid, the cooling medium and the oxidizing fluid.

According to the embodiments of the present invention, the supply external common manifolds and the exhaust external common manifolds for any one of the fuel fluid, the cooling medium and the oxidizing fluid is installed to the same end plate, alternatively, they are installed separately to the two end plates.

### Brief Description of the Drawings

The characteristics, functions of the present invention will further be explained based on the following embodiments and drawings.
Fig. 1 (A) illustrates a perspective view of the stacked-type fuel cell according to the embodiments of the present invention.
Fig. 1 (B) illustrates a cross-sectional view of the cell unit 8 structure, according to the embodiments of the present invention.
Fig. 2 illustrates a cross-sectional view for explaining the channels for various fluids 31, 32, 33 provided between each layer of the cell unit 8 and between the cell units 8, according to the embodiments of the present invention.
Fig. 3 illustrates a schematic drawing of the cell unit 8 for explaining the regularity of Bravais lattice pattern extended within 2 dimensions applied to the arrangement of the openings 11, 12, 13 formed on the plane of the cell unit 8, according to the embodiments of the present invention.
Fig. 4 illustrates a schematic drawing for explaining the regularity of the arrangement of the openings 11, 12, 13 formed on the plane of the cell unit 8, according to the embodiments of the present invention.
Fig. 5 illustrates a schematic drawing for explaining the regularity of the arrangement of the openings 11, 12, 13 formed on the plane of the cell unit 8, according to the embodiments of the present invention.
Fig. 6 illustrates cross-sectional views for explaining the shapes of the internal common manifolds 41, 42, 43 formed in the perpendicular direction to the cell stack structure body 9, according to the embodiments of the present invention.
Fig. 6 (A) illustrates the case of coherent internal common manifolds for various fluids 41, 42, 43 that are all formed in parallel to one another, in the perpendicular direction to the cell stack structure body 9.
Fig. 6 (B) illustrates the case of coherent internal common manifolds for various fluids 41, 42, 43 that are all formed in parallel to one another, at the acute inclined angles to the cell stack structure body 9.
Fig. 6 (C) illustrates the case of coherent internal common manifolds for various fluids 41, 42, 43 that are all formed in non-parallel to one another, at the acute inclined angles to the cell stack structure body 9.
Fig. 7 illustrates cross-sectional views for explaining the shape of the internal common manifolds 41, 42, 43 formed in the perpendicular direction to the cell stack structure body 9, according to the embodiments of the present invention.
Fig. 7 (A) illustrates the case of incoherent internal common manifolds for various fluids 41, 42, 43 formed in the perpendicular to the cell stack structure body 9, flows are in the same direction, and prepared in parallel to one another.
Fig. 7 (B) illustrates the case of incoherent internal common manifolds for various fluids 41, 42, 43 formed in the perpendicular to the cell stack structure body 9, flows are not in the same direction, and prepared non-parallel to one another.
Fig. 7 (C) illustrates the case of incoherent internal common manifolds for various fluids 41, 42, 43 formed in the perpendicular to the cell stack structure body 9, the flows are not in the same direction, and prepared in parallel to one another.
Fig. 7 (D) illustrates the case of incoherent internal common manifolds for various fluids 41, 42, 43 formed in the perpendicular to the cell stack structure body 9, the flows are not in the same direction, and prepared in non-parallel to one another.
Fig. 8 illustrates a cross-sectional view for explaining the internal common manifolds 41, 42, 43 formed by rotating the cell stack structure body 9 within the plane, according to the embodiments of the present invention.
Fig. 9 (A) illustrates a partial 3-dimensional view showing the formation of external common manifolds for various fluids 51, 52, 53 in the endplates 101, 102, according to the embodiments of the present invention.
Fig. 9 (B) illustrates a projection view showing the formation of external common manifolds for various fluids 51, 52, 53 in the endplates 101, 102, according to the embodiments of the present invention.
Fig. 9 (C) illustrates a schematic plan drawing showing the arrangement of connection ports 21, 22, 23 formed on the external common manifolds 51, 52, 53, according to the embodiments of the present invention.
Fig. 10 (A) illustrates a partial 3-dimensional view with cross section P-P' showing the formation of external common manifolds for various fluids 51, 52, 53 in the endplates 101, 102, according to the embodiments of the present invention.
Fig. 10 (B) illustrates a cross-sectional view P-P' showing the formation of external common manifolds for various fluids 51, 52, 53 in the endplates 101, 102 according to the embodiments of the present invention.
Fig. 10 (C) illustrates a schematic plan drawing showing the arrangement of connection ports 21, 22, 23 formed on the external common manifolds 51, 52, 53, according to the embodiments of the present invention.
Fig. 11 (A) illustrates a partial 3-dimensional view with cross section Q-Q' showing the formation of external common manifolds for various fluids 51, 52, 53 in the endplates 101, 102, according to the embodiments of the present invention.
Fig. 11 (B) illustrates a cross-sectional view Q-Q' showing the formation of external common manifolds for various fluids 51, 52, 53 in the endplates 101, 102 according to the embodiments of the present invention.
Fig. 11 (C) illustrates a schematic plan drawing showing the connection ports 21, 22, 23 formed on the external common manifolds 51, 52, 53, according to the embodiments of the present invention.
Fig. 12 (A) illustrates a partial 3-dimensional view with cross section R-R' showing the formation of external common manifolds for various fluids 51, 52, 53 in the endplates 101, 102, according to the embodiments of the present invention.
Fig. 12 (B) illustrates a cross-sectional view R-R' showing the formation of external common manifolds for various fluids 51, 52, 53 in the endplates 101, 102 according to one of the embodiments of the present invention.
Fig. 12 (C) a schematic plan drawing showing the arrangement of connection ports 21, 22, 23 formed on the external common manifolds 51, 52, 53, according to the embodiments of the present invention.
Fig. 13 illustrates an external view of the stacked-type fuel cell, according to the second embodiment.
Fig. 14 illustrates an external view showing the situation in which the cell stack structure body 9 is removed from the stacked-type fuel cell, according to the second embodiment.
Fig. 15 illustrates a 3-dimensional drawing in cross section showing the formation of external common manifolds for various fluids 51, 52, 53 in the endplate 102, according to the second embodiment of the present invention.
Fig. 16 illustrates a 3-dimensional drawing in cross section showing the formation of external common manifolds for various fluids 51, 52, 53 in the endplate 102, according to the second embodiment of the present invention.
Fig. 17 illustrates a 3-dimensional drawing in cross section showing the formation of external common manifolds for various fluids 51, 52, 53 in the endplate 102, according to the second embodiment.
Fig. 18 illustrates cross-sectional views for explaining the channels 31, 32, 33 of the cell unit 8, according to the embodiments of the present invention.
Fig. 18 (A) illustrates the channel 31 for the fuel fluid flowing through the anode side.
Fig. 18 (B) illustrates the channel 33 for the oxidizing fluid flowing through the cathode side.
Fig. 18 (C) illustrates the channel 32 for the cooling medium, which is formed between the separators of the adjacent cell unit 8.

The element symbols in the figure are as follows.
1 electrolyte membrane
2,3 electrode catalyst layer, catalyst layer
4,5 gas diffusion layer
6,7 separator,
8 cell unit
9 cell stack structure body
11 openings for fuel fluid
11A fuel fluid supply openings
11B fuel fluid exhaust openings
12 openings for cooling medium
12A cooling medium supply openings
12B cooling medium exhaust openings
13 openings for oxidizing fluid
13A oxidizing fluid supply openings
13B oxidizing fluid exhaust openings
14 vector A
15 vector B
16 basic unit of Bravais lattice within 2 dimensions
17 minimum power generating element
18 basic segment
19 sealing material
21 connection port for fuel fluid
21A fuel fluid supply connection port
21B fuel fluid exhaust connection port
22 connection port for cooling medium
23A cooling medium supply connection port
22B cooling medium exhaust connection port
23 connection port for oxidizing fluid
23A oxidizing fluid supply connection port
23B oxidizing fluid exhaust connection port
31 fuel fluid flow, a channel for fuel fluid
32 cooling medium flow, a channel for cooling medium
33 oxidizing fluid flow, a channel for oxidizing fluid
41 internal common manifold for fuel fluid
41A fuel fluid supply internal common manifold
41B fuel fluid exhaust internal common manifold
42 internal common manifold for cooling medium
42A cooling medium supply internal common manifold
42B cooling medium exhaust internal common manifold
43 internal common manifold for oxidizing fluid
43A oxidizing fluid supply internal common manifold
43B oxidizing fluid exhaust internal common manifold
51 external common manifold for fuel fluid
51A fuel fluid supply external common manifold
51B fuel fluid exhaust external common manifold
52 external common manifold for cooling medium
52A cooling medium supply external common manifold
52B cooling medium exhaust external common manifold
53 external common manifold for oxidizing fluid
53A oxidizing fluid supply external common manifold
53B oxidizing fluid exhaust external common manifold
61 pipe for connecting with external BOP for fuel fluid
61A fuel_fluid_supply pipe for connecting with external BOP
61B fuel_fluid_exhaust pipe for connecting with external BOP
62 pipe for connecting with external BOP for cooling medium
62A cooling_medium_supply pipe for connecting with external BOP
62B cooling_medium_exhaust pipe for connecting with external BOP
63 pipe for connecting with external BOP for oxidizing fluid
63A oxidizing_fluid_supply pipe for connecting with external BOP
63B oxidizing_fluid_exhaust pipe for connecting with external BOP
71 pipe for connecting with internal common manifold for fuel fluid
71A fuel_fluid_supply pipe for connecting with internal common manifold
71B fuel_fluid_exhaust pipe for connecting with internal common manifold
72 pipe for connecting with internal common manifold for cooling medium
72A cooling_medium_supply pipe for connecting with internal common manifold
72B cooling_medium_exhaust pipe for connecting with internal common manifold
73 pipe for connecting with internal common manifold for oxidizing fluid
73A oxidizing_fluid_supply pipe for connecting with internal common manifold
73B oxidizing_fluid_exhaust pipe for connecting with internal common manifold
80 edge structure of external common manifold
81 pipe for connecting with external BOP for fuel fluid (for edge)
81A fuel_fluid_supply pipe for connecting with external BOP (for edge)
81B fuel _fluid _exhaust pipe for connecting with external BOP (for edge)
82A cooling_medium_supply pipe for connecting with external BOP for supplying cooling medium (for edge)
82B cooling_medium_exhaust pipe for connecting with external BOP (for edge)
83A oxidizing_fluid_supply pipe for connecting with external BOP (for edge)
83B oxidizing_fluid_exhaust pipe for connecting with external BOP (for edge)
90 edge structure for external common manifold
91 pipe for connecting with internal common manifold for fuel fluid (for edge)
91A fuel_fluid_supply pipe for connecting with internal common manifold (for edge)
91B fuel _fluid _exhaust pipe for connecting with internal common manifold (for edge)
92 pipe for connecting with internal common manifold for cooling medium (for edge)
92A cooling_medium_supply pipe for connecting with internal common manifold (for edge)
92B cooling_medium_exhaust pipe for connecting with internal common manifold (for edge)
93 pipe for connecting with internal common manifold for oxidizing fluid (for edge)
93A oxidizing_fluid_supply pipe for connecting with internal common manifold (for edge)
93B oxidizing_fluid_exhaust pipe for connecting with internal common manifold (for edge)
101 endplate
102 endplate
511 First zone
522 Second zone
533 Third zone
711 coupling unit of the pipe for connecting with internal common manifold for fuel fluid
722 coupling unit of the pipe for connecting with internal common manifold for cooling medium
733 coupling unit of the pipe for connecting with internal common manifold for oxidizing fluid
F Row F
G Row G
K Row K
J Row J

### Preferred Embodiments of the Invention

In order to more clearly understand the above objectives, features, and advantages of the present invention, specific embodiments of the present invention will now be described in detail with reference to the drawings.

In the following description, many specific details are set forth in order to provide a thorough understanding of the present invention, however, the present invention may be embodied in other ways than those set forth herein. The present invention is not limited by the specific embodiments disclosed.

As shown in this application and the claims, words such as "a", "one," "one type," and/or "corresponding" being used do not particularly indicate single element, and it can include plural elements unless the context clearly indicates otherwise. In general, the terms "including" and "comprising" are meant to simply include the explicitly identified steps and elements, but these steps and elements do not constitute an exclusive element. The method or apparatus of the present invention may also include other steps or elements.

Hereinbelow, the embodiments of the present invention will be described in detail.

The preferred embodiments of the stacked-type fuel cell for the present invention is exemplified and described in detail with reference to the drawings. In the description below, the polymer electrolyte fuel cell (PEFC) is taken as an example. However, the materials, dimensions, shapes, angles and the relative layout positions of the components mentioned in the embodiments are not particularly limited to those mentioned in this specification unless otherwise stated in this specification document.

According to one aspect of the invention, the cell unit comprises a first separator and a second separator opposite to each other, as well as a membrane electrode assembly laminated between the first and the second separators. The cell unit includes a plurality of fuel fluid openings, a plurality of cooling medium openings, and a plurality of oxidizing fluid openings of the first separator, the second separator and the membrane electrode assembly, that pass through an extension plane of the cell unit. At least one of the fuel fluid openings, at least one of the cooling medium openings, and at least one of the oxidizing fluid openings, are arranged at a center area of the cell unit. The openings arranged in the center area can balance the flow of the fuel fluid, the cooling medium, and the oxidizing fluid in the cell unit even more, as compared with the openings arranged only at the end portions. One can understand that the openings can be arranged at a portion of the center area. In the context of the present invention, the scope of the term "center area" should be understood broadly without being limited to a small portion in the center of a cell unit. For example, the area of the center area can reach 80% or more of the surface of the cell.

According to the embodiments, the plurality of fuel fluid openings, the plurality of cooling medium openings, and the plurality of oxidizing fluid openings are periodically repeated throughout the cell unit or are periodically repeated with fluctuation to some extent, to constitute the basic unit. In the embodiments, the openings are arranged not only in the center area but also in the edge portions other than the center area. Further, the cell unit may have an edge structure that terminates the periodic repetition of the basic units in the edge portion other than the center area.

A structure of polymer electrolyte fuel cell (PEFC) having the cell stack structure body 9 will be explained hereinbelow.

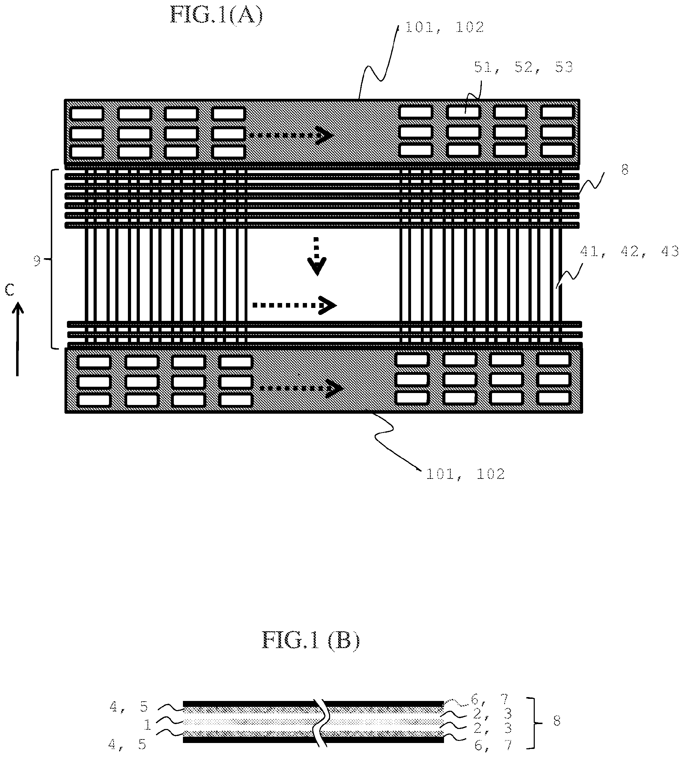

Fig. 1 (A) illustrates one example of the perspective view showing the cross-sectional structure of the PEFC having the cell stack structure body 9. The stacked-type fuel cell according to one embodiment of the present invention can utilize various fuels such as pure hydrogen and methanol. The example below is explained by taking hydrogen as the fuel.

The cell stack structure body 9 is stacked in layer one by one or a plurality of cell units 8. Fig. 1 (B) showing a laminate structure of the cell unit 8 is provided with an electrolyte membrane 1 and a pair of electrode catalyst layers 2, 3 (that is, a cathode side catalyst layer and an anode side catalyst layer) are arranged by sandwiching the electrolyte membrane 1. On the outer side of the electrode catalyst layers 2 and 3, gas diffusion layers 4 and 5 are arranged respectively. Further, on the outer side of the gas diffusion layers 4 and 5, a pair of separators 6 and 7 are arranged respectively. Membrane electrode assembly is comprised of the layers 1 through 5.

The electrolyte membrane 1 is a polymer membrane having a proton conductivity. Being made of solid, the electrolyte has excellent characteristics such as no loss due to evaporation, thin membrane formation is possible, and the operating temperature is low ranging from a normal temperature to 90 degrees centigrade. The low operating temperature and the high output density are suitable as the power source in vehicle.

An anode fuel cell reaction and a cathode fuel cell reaction occur on the electrode catalyst layers 2 and 3 arranged at both sides of the electrolyte membrane 1. Dissociation of hydrogen into proton and electron (hydrogen oxidation reaction) is promoted at the anode side of the electrode catalyst layer 2, 3. Reactions for forming water from the proton, the electron and oxygen (oxygen reduction reaction) are promoted at the cathode side of the electrode catalyst layer 2, 3.

The gas diffusion layers 4 and 5 disposed at both sides of the electrode catalyst layers 2 and 3 have roles of dispersing and transporting the reaction fluids (the fuel fluid and the oxidizing fluid) to the electrode catalyst layers 2 and 3. The separators 6 and 7 function as a current collector for collecting the generated power. In the following description, the fuel fluid is gas (hydrogen) and the oxidizing fluid is gas (including oxygen or air).

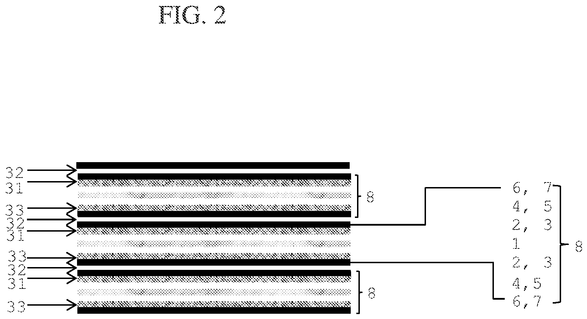

The separators 6 and 7 have been called by this name since they separate the anode reaction fluid (the fuel fluid) and the cathode reaction fluid (the oxidizing fluid). As is apparent from Fig. 2, a first channel 31 where the fuel fluid flows through is formed on the anode side of the separators 6, 7. A second channel 33 where the oxidizing fluid flows through is formed on the cathode side of the separators 6, 7. A third channel 32 where the cooling medium flows through is formed on the adjacent sides of the separators 6, 7.

A sealing material 19 serves to seal each cell unit 8 and takes a role of forming channels 31, 32, 33 on the cell unit 8, where various fluids can flow through them. This role can be implemented by reducing the thickness of the separator 6, 7 itself and by reducing the height of the channels 31, 32, 33 for various fluids.

The fuel cell's power generation function of cell unit 8 that forms the cell stack structure body 9 is realized by a structure of laminating the seven functional layers illustrated in Fig. 1 (B) and Fig. 2. The structure of the stacked-type fuel cell according to the embodiments of the present invention will be described in detail below, explained mainly in 4 parts, namely: the cell unit 8, the internal common manifolds 41, 42, 43, the channels 31, 32, 33, and the external common manifolds 51, 52, 53. The external common manifold 51 includes, for example, the pipes 61 and 72, the external common manifold 52 includes, for example, the pipes 62 and 72, and the external common manifold 53 includes, for example, the pipes 63 and 73. Similarly, the external common manifold 51A includes, for example, pipes 61A and 71A, and the analogy therewith.

### [Cell unit]

Next, the cell unit 8 related to the present invention will be described with reference to Figs. 1 to 5.

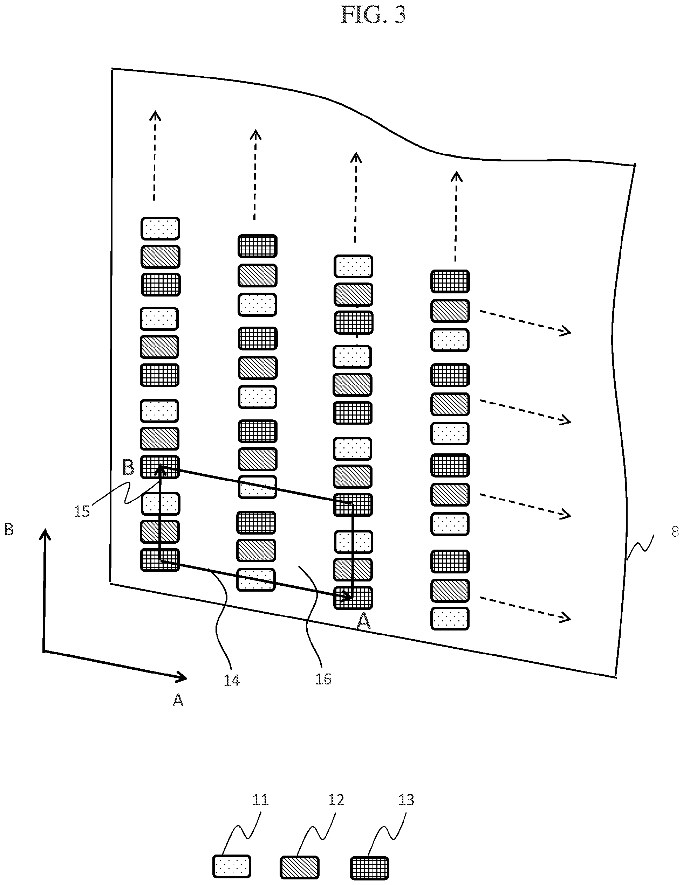

The cell unit 8 according to the embodiments of the present invention can arbitrarily be extended within 2 dimensions in the plane direction of the cell unit 8. The meaning of "can arbitrarily be extended within 2 dimensions in the plane direction" is that the effective area of the cell unit 8 can be extended freely in the plane direction as required, as illustrated in Fig. 3. In accordance with the increase in the effective area of the cell unit 8 in the plane direction, the number of openings 11, 12, 13 for constituting the internal common manifolds 41, 42, 43 can be increased by following a pattern having a symmetry of Bravais lattice within 2 dimensions, which will be described later. Note that even if the effective area of the cell unit 8 is extended, the dimension of the openings 11, 12, 13 to be installed on the plane of cell unit 8 remains the same, or, they do not change greatly, and their dimensions will not enlarge accompanying the extension of the effective area of cell unit 8. Also, "plane direction" means the direction parallel with respect to the plane of the cell unit 8. Further, "effective area in the plane direction of the cell unit 8" indicates the reaction area of the catalyst layer 2, 3.

The large output current from the stacked-type fuel cell is acquired without changing the voltage of the stacked-type fuel cell, and the output density can be increased without relying on the power voltage, since the power current that relies only on the reaction area of the catalyst layer 2, 3 included in the cell unit 8 is determined by changing the effective area of the cell unit 8.

As shown in Fig. 1(B), the cell unit 8 is laminated by 7 functional layers in the following order, namely: a separator 6 or 7, a gas diffusion layer 4 or 5, an electrode catalyst layer 2 or 3, an electrolyte membrane 1, an electrode catalyst layer 2 or 3, a gas diffusion layer 4 or 5, and a separator 6 or 7. One can understand that each opening 11, 12, 13 of the cell unit 8 is connected only to their desired functional layer. For example, the opening 11 is connected to only one of the gas diffusion layers 4 or 5 for flowing the fuel fluid. The opening 13 allows the oxidizing fluid to flow, and it is connected only to the other one of the gas diffusion layers 4 or 5. The opening 12 allows the cooling medium flows, and it is connected only to the cooling medium channel between the adjacent partition walls. The sealing material can be installed around and between the opening and the layer where fluids are not desired to flow through.

The cell stack structure body 9 is formed by stacking up a plurality of cell units 8 mentioned above. The cell stack structure body 9 is the fuel cell's main body formed by stacking up the plurality of cell units 8. Several hundreds of cell units 8 are stacked up to be used in vehicles. Further, the cell stack structure body 9 formed by stacking the cell units 8 according to the embodiments of the present invention can arbitrarily be extended in 3 dimensions. What we mean by "arbitrarily be extended in 3 dimensions" is that, as shown in Fig. 1, the number of cell units 8 to be stacked is increased freely in the stacking direction of the cell units 8, in addition to the extension within 2 dimensions in the plane direction of the cell units 8. Here, direction C is defined as the direction of stacking up the cell units 8 (i.e., the stacking direction). The dotted line drawn horizontally in Fig. 1 indicates the direction of extension within 2 dimensions. The dotted line drawn vertically in Fig. 1 indicates the extension along the stacking direction.

Also, the output voltage of stacked-type fuel cell can be decided by changing the number of cell units 8 for stacking.

Herein, the various fluids mentioned in the present invention will be described. The various fluids are the fuel fluid, the cooling medium and the oxidizing fluid circulating within the staked-type fuel cell. The specific route inside the fuel cell for the various fluids sent externally from the outside source involves: an inlet port for various fluids output from an external BOP (to be described later); a supply external common manifold 51A, 52A, 53A (include a supply pipe for connecting with external BOP 61A, 62A, 63A and a supply pipe for connecting with internal common manifold 71A, 72A, 73A); a supply internal common manifold 41A, 42A, 43A; the cell unit 8 (made up of seven functional layers), an exhaust internal common manifold 41B, 42B, 43B; an exhaust external common manifold 51B, 52B, 53B (include an exhaust pipe for connecting with external BOP 61B, 62B, 63B and an exhaust pipe for connecting with internal BOP 71B, 72B, 73B) and an exit to the external BOP.

Further, for the purpose of this specification document, in the above-mentioned circulation route, opening holes formed on the cell unit 8 for constituting the internal common manifolds 41, 42, 43 inside the cell stack structure body 9 are called "openings 11, 12, 13", and connecting portion that connects the internal common manifolds 41, 42, 43 with the external common manifolds 51, 52, 53 are called "connection ports 21, 22, 23".

Further, as for the openings 11, 12, 13 formed on the cell unit 8, before the cell units 8 are stacked for constituting the internal common manifolds 41, 42, 43, the openings 11, 12, 13 are regarded as a part of the cell unit 8. After the formation of the cell stack structure body 9 is complete by stacking the cell units 8, the openings 11, 12, 13 can be taken as the internal common manifolds 41, 42, 43. In simple terms, the openings 11, 12, 13 on the cell units 8 become the internal common manifolds 41, 42, 43 after stacking the cell units 8.

Manufacturing methods for forming the openings 11, 12, 13 provided on the cell unit 8 to constitute the internal common manifolds 41, 42, 43 may include machine processing, laser processing, etching, and so forth.

### [Internal Common Manifolds]

Next, the internal common manifolds 41, 42, 43 related to the present invention will be described with reference to Figs. 3 to 8.

The internal common manifolds 41, 42, 43 are disposed inside of the cell stack structure body 9 constructed by stacking the plurality of cell units 8. The internal common manifolds 41, 42, 43 serve to supply various fluids supplied from the external source to the fuel fluid channel 31, the cooling medium channel 32 and the oxidizing fluid channel 33, and to exhaust the used gas and fluid to outside. The supply internal common manifolds for various fluids 41A, 42A, 43A and the exhaust internal common manifolds for various fluids 41B, 42B, 43B are arranged perpendicularly or at the acute inclined angles to the plane direction of the cell units 8.

A portion comprising the internal common manifold for fuel fluid 41 involves a distance from the fuel fluid supply connection port 21A, via the fuel fluid supply opening 11A and the fuel fluid exhaust opening 11B, to the fuel fluid exhaust connection port 21B. A portion comprising the internal common manifold for cooling medium 42 involves a distance from the cooling medium supply connection port 22A, via the cooling medium supply opening 12A and the cooling medium exhaust opening 12B, to the cooling medium exhaust connection port 22B. A portion comprising the internal common manifolds for oxidizing fluid 43 involves a distance from the oxidizing fluid supply connection port 23A, via the oxidizing fluid supply opening 13A and the oxidizing fluid exhaust opening 13B, to the oxidizing fluid exhaust connection port 23B.

As already described, in the plane of the cell unit 8, the pattern having the symmetry of Bravais lattice in 2 dimensions is adopted to the openings 11, 12, 13 by repeating the basic unit 16. As a matter of course, the number of internal common manifolds 41, 42, 43 will be the same as the number of openings 11, 12, 13 installed on the plane of a single cell unit 8. The basic unit 16 is a unit having a minimum repeating periodic arrangement pattern for the openings formed by a two-dimensional Bravais lattice arrangement.

In the above statement, a term "perpendicular" is mentioned which means that the internal common manifold 41, 42, 43 is installed at the right angle of 90 degrees with respect to the plane of the cell unit 8, and "acute inclined angles" means that the internal common manifold is installed at the angles ranging from 1 to 90 degrees with respect to the plane of the cell unit 8.

Figs. 3 to 5 illustrate a schematic drawing showing the plane direction of the cell unit 8. In these drawings, the openings 11, 12, 13 that construct the internal common manifolds for various fluids 41, 42, 43 are shown.

A layout of the openings 11, 12, 13 is arranged with a pattern having a symmetry of Bravais lattice within 2 dimensions, in the plane of the cell unit 8. Alternatively, the openings 11, 12, 13 is arranged with a pattern having a symmetry of Bravais lattice within 2 dimensions with some fluctuations, in the plane of the cell unit 8. What we mean by "layout arranged on a plane with a pattern having the symmetry of Bravais lattice" is that, because the basic unit 16 for extending in 2 dimensions expressed by a vector A (14 in Fig. 3) and a vector B (15 in Fig. 3) is regarded as a repeating unit, therefore, the basic unit 16 comprises the vector A and the vector B that can be drawn by starting from any openings 11, 12, 13 shown in Fig. 3, if the pattern having the symmetry of Bravais lattice is applied. Fig. 3 shows the basic unit 16 for extending within 2 dimensions of Bravais lattice expressed by a vector A and a vector B. In this example, the basic unit 16 is shaping an oblique lattice. The basic unit 16 is determined by the number of openings 11, 12, 13 surrounded by the 4 edge lines of the oblique lattice. Specifically, in terms of the number of openings 11, 12, 13 encompassed by the 4 edge lines (includes vector A and B) of the basic unit 16 of Fig. 3, there are four fuel fluid openings 11 which are all half-sized openings 11, underneath the 4 edge lines of the basic unit 16, and together these are counted as two fuel fluid openings 11. There are two cooling medium openings 12, which are all half-sized openings 12, underneath the 2 edge lines of the basic unit 16, and together these are counted as one cooling medium opening 12. There is one more cooling medium opening 12 inside the area surrounded by the basic unit 16, and together these two are counted as two cooling medium openings 12. There are four oxidized fuel openings 13, which are quarter-sized openings 13, underneath the 4 corners of the basic unit 16, and together these are counted as one oxidizing fluid opening 13. There is one more oxidizing fluid opening 13 inside the area encompassed by the basic unit 16, and together these two are counted as two oxidizing fluid openings 13. Henceforth, the basic unit 16 is comprised of six openings altogether by including the openings 11, 12, 13 encompassed by the 4 edge lines and the openings 11, 12, 13 not encompassed by the edge lines (inside of the edge lines). The meaning of "encompass" in this context is a portion of the openings surrounded by the edge lines (vectors) of the basic unit 16 of Bravais lattice within 2 dimensions. Besides, there are 6 edge lines in the example of using the hexagonal lattice as the basic unit 16 of Bravais lattice within 2 dimensions.

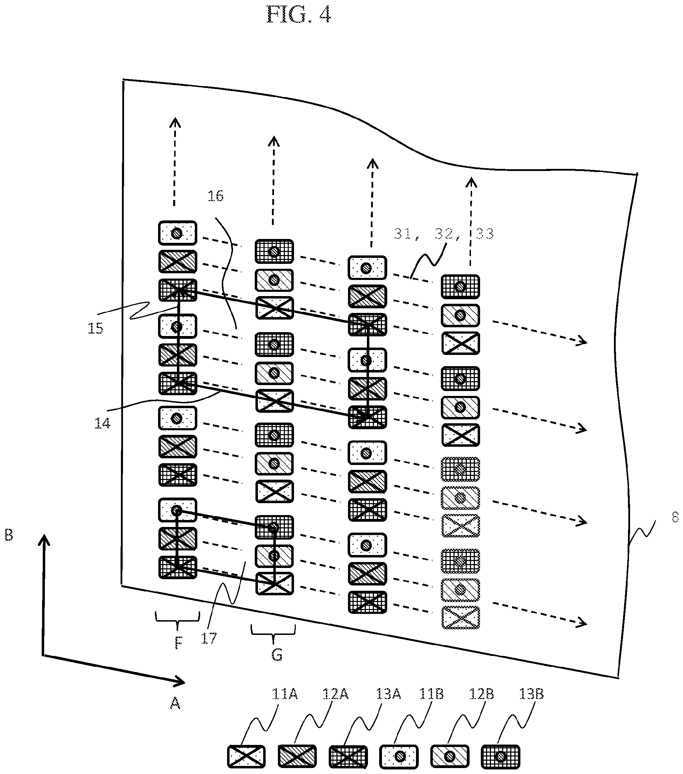

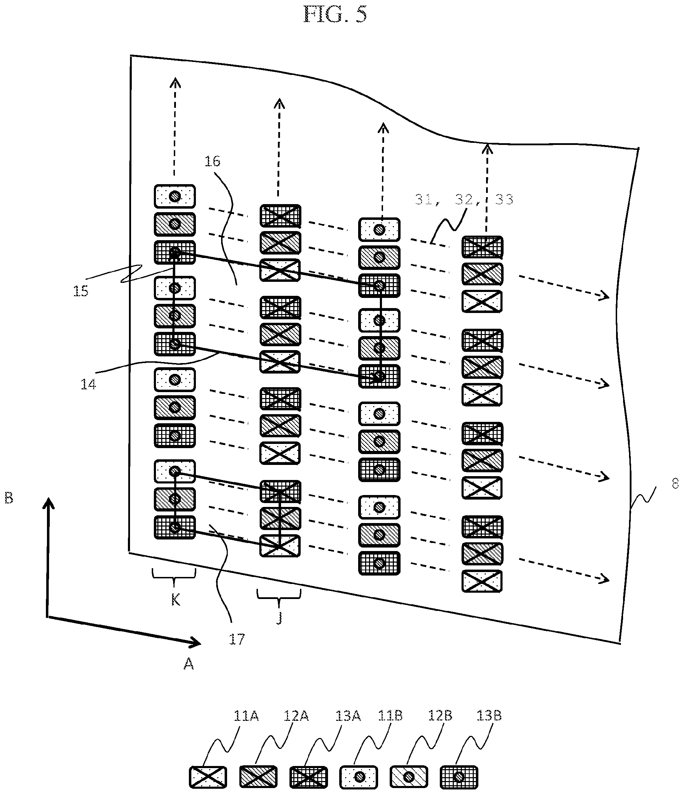

In Figs. 4 and 5, in order to provide a power generation function to the cell unit 8, the openings 11, 12, 13 are divided into the supply openings and the exhaust openings, respectively. These include a fuel fluid supply opening 11A, a cooling medium supply opening 12A, an oxidizing fluid supply opening 13A, a fuel fluid exhaust opening 11B, a cooling medium exhaust opening 12B, and an oxidizing fluid exhaust opening 13B. In order to facilitate the arrangement of external common manifolds 51, 52, 53, a layout of the supply openings 11A, 12A, 13A that constitute the supply internal common manifolds 41A, 42A, 43A and the exhaust openings 11B, 12B, 13B that constitute the exhaust internal common manifolds 41B, 42B, 43B is comprised by repeating the basic unit 16 which is based on the regularity of Bravais lattice for extending within 2 dimensions, as indicated on Figs. 4 and 5. "Minimum power generating element 17" shown in Figs. 4 and 5 denotes the power generating element comprising the supply and exhaust openings 11, 12, 13 required at least for the fuel cell to function. In the minimum power generating element 17, the number of the openings 11, 12, 13 encompassed within the 4 edge lines comprises a total of 2 or more openings including a quarter or more, or less than quarter of fuel fluid supply opening 11A, a half or more, or less than half of cooling medium supply openings 12A and, a quarter or more, or less than quarter of oxidizing fluid supply openings 13A, and a quarter or more, or less than quarter of fuel fluid exhaust openings 11B, a half or more, or less than half of cooling medium exhaust openings 12B, and a quarter or more, or less than quarter of oxidizing fluid exhaust openings 13B.

As is apparent from Figs. 4 and 5, the minimum power generating element 17 cannot be extended periodically. The number of openings 11, 12, 13 encompassed within 4 edge lines of the minimum power generating element 17 is not the same as the number of openings 11, 12, 13 encompassed within 4 edge lines of the basic unit 16. However, the basic unit 16 and the minimum power generating element 17 have geometric similarity. They both have 6 types of openings including the supply openings 11A, 12A, 13A and the exhaust openings 11B, 12B, 13B for the fuel fluid, the cooling medium and the oxidizing fluid. Accordingly, the basic unit 16 of the Bravais lattice within 2 dimensions expresses more logically the periodicity and the symmetry and corresponds to the minimum power generating element 17 which serves to function the fuel cell. In Figs. 4 and 5, a symbol used to express the supply openings 11A, 12A, 13A is "X". A symbol used to express the exhaust openings 11B, 12B, 13B is black circle.

"Fluctuation" in physics indicates a change from spatial average value to time average value having a range and strength (such as energy, density and voltage). As the way of thinking about the fluctuation, one may simply think that the measured value is the value of the physical quantity, however, various conditions appear probabilistically in the real world. Therefore, there are many fluctuation values of the physical quantity. The fluctuation specifies to what extent the physical value differs from the measured values.

In other words, the dimensions, shapes and layout positions of the openings 11, 12, 13 designed and positioned in the plane of the cell unit 8 does not need to be perfect. They can be designed and positioned with slight fluctuations. Specifically, there may be some differences in size, shape, and/or arrangement position among the openings 11 in each basic unit, and similarly, there may be some differences among the openings 12 in each basic unit. Alternatively, there may be some differences among the openings 13 in each basic unit.

Bravais lattice is explained hereinbelow. Crystal has a periodic and regular atomic arrangement known as lattice. It can be said that the crystal has a repeating lattice unit (where lattice points are interconnected). We call the lattice structure, classified by using the regularity of arrangement, and classified based on the symmetry of lattice points, as Bravais lattice. Classification of Bravais lattice within 2 dimensions includes 5 repeating units, namely: oblique lattice, rectangular lattice, hexagonal lattice, square lattice and centered rectangular lattice.

The reasons for applying the repeating basic unit 16 (refer to Fig. 3) that has the regularity of Bravais lattice as such in designing the layout of the openings 11, 12, 13 of the cell unit 8 to constitute the internal common manifolds 41, 42, 43 are: supplying and exhausting various fluids uniformly throughout the cell unit 8; improving flow distribution by suppressing the pressure loss of the flow; and using the area of cell unit 8 effectively.

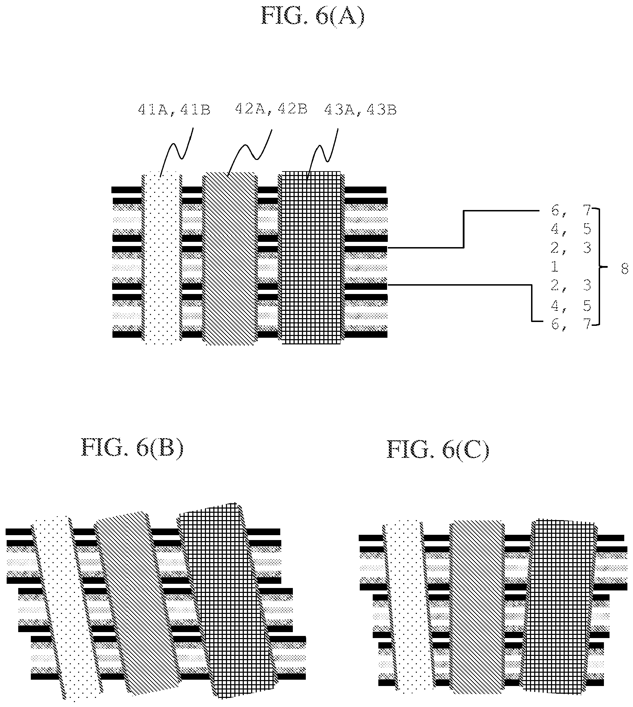

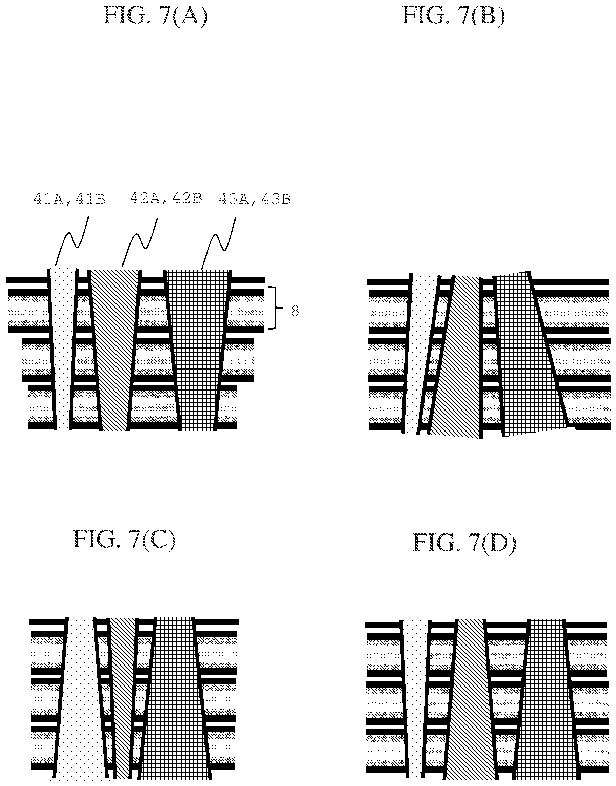

Figs. 3 to 5 illustrate the openings 11, 12, 13 that constitute the internal common manifolds 41, 42, 43, arranged in the plane direction of the cell unit 8. According to Figs. 3 to 5 which explain the layout of the openings 11, 12, 13, the dimension and shape of the openings 11, 12, 13 are all expressed as identical in size. However, the dimension of the openings 11, 12, 13 does not necessarily has to be the same. The dimension of the openings 11, 12, 13 may appropriately be set depending on the shape and the width of the internal common manifold for various fluids 41, 42, 43 and depending on their flow change (refer to Figs. 6 and 7 for the internal common manifolds 41, 42, 43 having different width dimensions, which will be described later in the specification document). On the drawings, due to the limitation in drawing capability, a shape of the openings is expressed in rectangle with rounded edges, however, another shape may be used, or different shapes may be used in combination.

Herein, one example of the regularity in arranging the openings 11, 12, 13 of the cell units 8 to constitute the internal common manifolds 41, 42, 43 will be described specifically, by referring to Figs. 3 and 4.

As shown in Fig.3, the basic unit 16 in arranging the openings for various fluids 11, 12, 13 are being extended within 2 dimensions according to various patterns of Bravais lattice. Fig. 3 is a schematic view within the plane direction of the cell units 8, illustrating the regularity of oblique pattern of Bravais lattice.

Also, according to the openings 11, 12, 13 that constitute the internal common manifolds for various fluids 41, 42, 43 arranged perpendicularly or at the acute inclined angles to the plane of the cell units 8 as shown in Fig. 4, the supply openings for various fluids 11A, 12A, 13A and the exhaust openings for various fluids 11B, 12B, 13B are positioned along the channels 31, 32, 33 at the closest and opposing position with each another. As a specific example, in Fig. 4, one can see that there is the oxidizing fluid supply opening 13A which is set closest to the oxidizing fluid exhaust opening 13B, at the opposing position with each other along the oxidizing fluid channel direction of the cell units 8. By setting these openings 13A and 13B most close to one another, the fluid flow of the same kind (the oxidizing fluid in this example) will not cease its flow on its way, and this is effective in improving the fuel cell reaction. All catalyst reaction area will be utilized at maximum so that the catalyst reaction area is not wasted.

Herein, another example of the regularity in arranging the openings 11, 12, 13 of the cell units 8 that constitute the internal common manifolds 41, 42, 43 will be described specifically, by referring to Fig. 4.

Fig. 4 further illustrates the case in which both the supply openings for various fluids 11A, 12A, 13A and the exhaust openings for various fluids 11B, 12B, 13B are co-existing. Row F and row G including these openings 11, 12, 13 are under a supplemental relationship with each other. That is, on either one of the row F or the row G, the supply openings 11A, 12A or 13A for the same fluid does not exist on the same row as the exhaust openings 11B, 12B or 13B for the same fluid.

A specific example is given to illustrate this point. If the fuel fluid exhaust opening 11B is arranged on the row F, then the fuel fluid supply opening 11A is arranged on another row G adjacent to the row F, if the cooling medium supply opening 12A is arranged on the row F, then the cooling medium exhaust opening 12B is arranged on another row G adjacent to the row F, and if the oxidizing fluid supply opening 13A is arranged on the row F, then the oxidizing fluid exhaust opening 13B is arranged on another row G adjacent to the row F.

Further, another example of the regularity in arranging the openings 11, 12, 13 of the cell units 8 that constitute the internal common manifolds 41, 42, 43 will be described specifically, by referring to Fig. 5.

Fig. 5 illustrates the case in which either one of the supply openings for various fluids 11A, 12A, 13A or the exhaust openings for various fluids 11B, 12B, 13B are arranged exclusively on a row J or a row K along the plane direction of the cell unit 8. Either one of the openings 11A, 12A, 13A or the openings 11B, 12B, 13B are arranged on the same row, and the rows are alternately arranged in the channel direction (direction A). That is, a row specialized for supplying (row J in Fig. 5) and a row specialized for exhausting (row K in Fig. 5) are alternately arranged. If the internal common manifolds 41, 42, 43 for the fluids are designed in a row unit by using such a crystallographic pattern, the external common manifolds 51, 52, 53 can be arranged easily.

As mentioned before, according to Figs. 3 to 5, the openings 11, 12, 13 arranged in the plane direction of the cell unit 8 are designed by using the previously-described pattern having the symmetry of Bravais lattice within 2 dimensions and designed by a periodic 2-dimensional arrangement. That is, they are arranged at a regularity (with periodicity) by taking the pattern having the symmetry of Bravais lattice within 2 dimensions as the repeating unit. Alternatively, the openings 11, 12, 13 can be designed by using the pattern having the symmetry of Bravais lattice with certain fluctuation, for arrangement in 2 dimensions.

Also, the embodiments of the present invention are not limited to the example described in Figs. 3 to 5 as there are 5 types of symmetry of Bravais lattice pattern (oblique lattice, rectangular lattice, hexagonal lattice, square lattice and centered rectangular lattice).

As described previously, based on the above-mentioned layout of openings 11, 12, 13, the internal common manifolds 41, 42, 43 are formed by putting together the relevant openings 11, 12, 13, to result in the shapes shown in Figs. 6 and 7. Also, according to the internal common manifolds 41, 42, 43 formed in this manner, the internal common manifolds 41, 42, 43 are formed by stacking the cell units 8, by coherently combining the openings 11, 12, 13 above and below having the same shape and size on a straight line or a curved line. Further, the internal common manifolds 41, 42, 43 are formed by stacking the cell units 8, by incoherently combining the openings 11, 12, 13 of the cell units 8 above and below having a slightly displaced shape and size on a straight line or a curved line. The internal common manifolds 41, 42, 43 are communicated through without problem. That is, as described above, the openings 11, 12, and 13 provided in the plane direction in which the cell units 8 is extended, such openings may be combined (arranged) to have coherency within the extension plane of the cell unit 8 along the perpendicular direction or the acute inclined angle direction. Alternatively, the openings may be combined (arranged) to have incoherency. These arrangements were effective for improving the flow of various fluids.

Further, what we mean by "coherency" is the state of acquiring coherence by combining the openings 11, 12, 13 of the first cell units 8 and the second cell unit 8 at the same size and shape. The result of "being coherent" is that the cross-sectional width sizes of the straight or the curved internal common manifolds for various fluids 41, 42, 43 will be the same throughout the whole pipe (refer to Fig. 6 (A) (B) (C)).

In case of stacking up the cell units 8 exemplified in Figs. 3, 4 and 5 where the openings 11, 12, 13 for various fluids are formed on the cell units 8 in the perpendicular direction of the cell units 8, the coherent internal common manifolds 41, 42, 43 can be formed as shown in Fig. 6. Fig.6 (A) is the case of being coherent where the internal common manifolds for various fluids 41, 42, 43 are all in parallel to one another, in the perpendicular direction to the cell units 8. Fig.6 (B) is the case of being coherent where the internal common manifolds for various fluids 41, 42, 43 are all in parallel to one another, in the acute inclined angle direction to the cell units 8. Fig.6 (C) is the case of being coherent where the internal common manifolds for various fluids 41, 42, 43 are all non-parallel to one another, in the acute inclined angle direction to the cell units 8.

Further, what we mean by "incoherent" is the state of acquiring incoherence by combining the openings 11, 12, 13 of the first cell units 8 and the second cell unit 8 at a slightly displaced size and shape. The result of "being incoherent" is that the cross-sectional width sizes of the straight or the curved internal common manifolds for various fluids 41, 42, 43 will change throughout the whole pipe (refer to Fig. 7 (A) (B) (C) (D)).

In case of stacking up the cell unit 8 where the openings 11, 12, 13 of the cell units 8 are combined in the perpendicular direction as exemplified in Figs. 3, 4 and 5, the internal common manifolds 41, 42, 43 that are incoherent can be formed as shown in Fig. 7. Fig. 7 (A) illustrates the case in which the various fluids flowing through the internal common manifolds 41, 42, 43 are in the same direction, and the center line of the internal common manifolds 41, 42, 43 are in parallel to one another. Fig. 7 (B) illustrates the case in which the various fluids flowing through the internal common manifolds 41, 42, 43 are not in the same direction, and the center line of the internal common manifolds 41, 42, 43 are not in parallel to one another. Fig. 7 (C) illustrates the case in which the various fluids flowing through the internal common manifolds 41, 42, 43 are not in the same direction, and the center line of the internal common manifolds 41, 42, 43 are in parallel to one another. Fig. 7 (D) illustrates the case in which the various fluids flowing through the internal common manifolds 41, 42, 43 are not in the same direction, and the center line of the internal common manifolds 41, 42, 43 are in parallel to one another. For all cases of Figs. 7 (A), (B), (C) and (D), the internal common manifolds 41, 42, 43 are installed perpendicularly or at the acute inclined angles to the cell unit 8. Fig. 7 (B) and (C) illustrate the example of compactly arranged internal common manifolds 41, 42, 43.

The internal common manifolds 41, 42, 43 of Fig. 7 show a nozzle shape having a narrow end. That is, the width size at the inlet of the internal common manifold 41, 42, 43 is greater than the width size near to the exit of the internal common manifold 41, 42, 43. As for the normal shape where the width size of the internal common manifolds 41, 42, 43 are equal throughout as in Fig. 6, the loss of kinetic energy at the inlet gets large, and the fluid speed near the exit tends to get low due to the distance the fluid must travel from the inlet. However, by narrowing the width size near to the exit accordingly, the kinetic energy is increased without having to reduce the flow, at the expense of fluid flow energy and pressure. Various fluids can be supplied to the cell unit 8 accordingly.

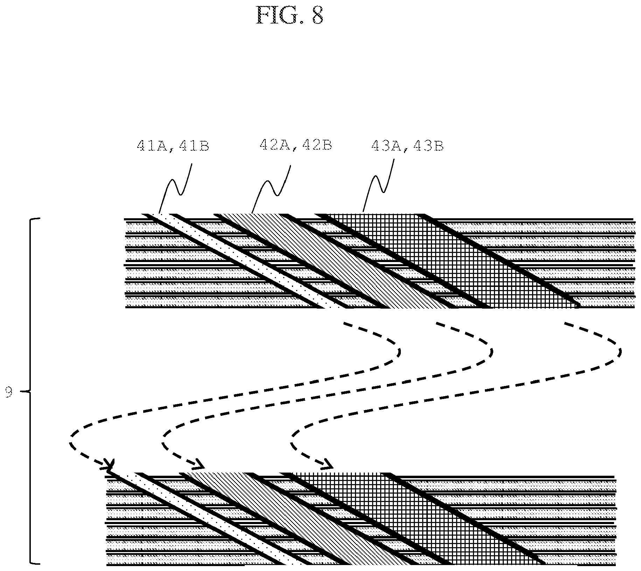

Fig. 8 shows the internal common manifold 41, 42, 43 formed as the results of helically rotating and then stacking the plane of the cell units 8. When the cell units 8 are stacked in the perpendicular direction of the cell stack structure body 9, then the internal common manifolds 41, 42, 43 can be formed under the following cases. The case in which the plane rotation angle of the plane arrangement between the adjacent cell units 8 is zero. And, the case in which the cell units 8 are rotated at a pre-determined angle. What we mean by "zero rotation angle" is that the cell units 8 are stacked in a perfect alignment without rotation. As for "rotated at a pre-determined angle", The channels 31, 32, 33 related to the present invention will be described with reference to Figs. 2, 4 and 5. This improves the flow of various fluids in the internal common manifolds 41, 42, 43.

### [Channels]

As described above, since the cell units 8 are stacked, the identical cell units 8 are being placed adjacent to them as shown in detail in Fig. 2. A channel 31 for fuel fluid that passes through the gas diffusion layer 4 and 5 is installed between the separator 6, 7 and the gas diffusion layer 4, 5, at the anode side of the cell unit 8. A channel 33 for the oxidizing fluid that passes through the gas diffusion layer 4, 5 is installed in between the separator 6, 7 and the gas diffusion layer 4, 5, at the cathode side of the cell unit 8. A channel 32 for the cooling medium that flows between the cell units 8. In Figs. 4 and 5, a trajectory of flow paths for the channels 31, 32, 33 are indicated between the rows of the openings 11, 12, 13 along the direction B. The fluid flows in the two direction of A-axis.

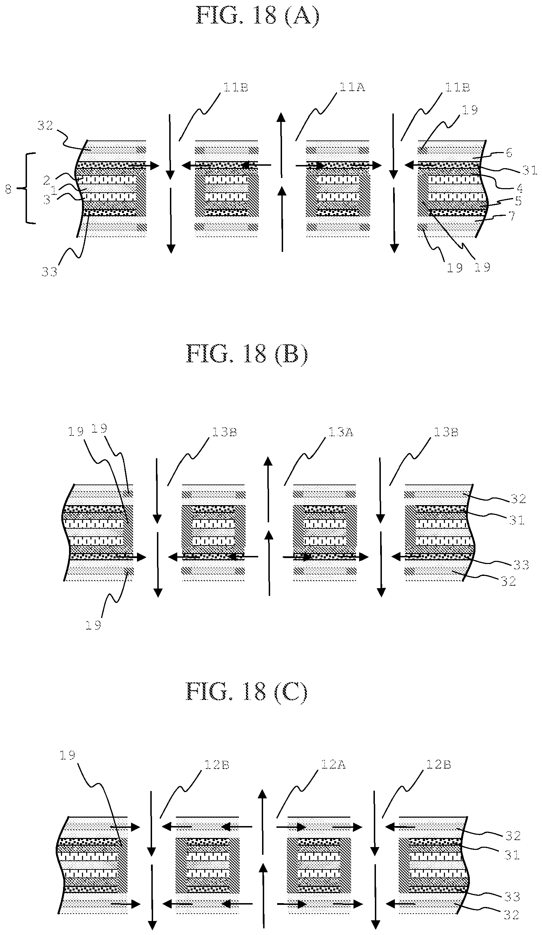

As shown in Fig. 18, the supply and exhaust of various fluids into and out from the cell unit 8 are controlled by the sealing material 19. Sealing is implemented at the vicinity of the supply openings 11A, 12A, 13A and the exhaust openings 11B, 12B, 13B. That is, the irrelevant openings of the fluid concerned are blocked so that the fluid concerned will not flow into the irrelevant channels. That is, a role of the sealing material 19 is to connect the internal common manifold 41, 42 and 43 with their respective channels 31, 32 and 33 of the cell unit 8 and between the cell units 8, and to allow supply and exhaust of various fluids without interfering with each another. Here, solid arrows shown in Fig. 18 indicate flow directions of various fluids.

Fig. 18 (A) illustrates the channel 31 where the fuel fluid flows through, wherein the supply opening 12A that serves as an inlet of the cooling medium channel 32 and the exhaust opening 12B that serves as an exit of the cooling medium channel 32 (refer to Fig. 18 (C)), and the supply opening 13A that serves as an inlet of the oxidizing fluid channel 33 and the exhaust opening 13B that serves as an exit of the oxidizing fluid channel 33 (refer to Fig. 18 (B)), are all blocked by the sealing material 19, for supplying and exhausting the fuel fluid to the cell unit 8, so that the cooling medium and the oxidizing fluid do not flow into the channel 31 of the fuel fluid.

Fig. 18 (B) illustrates the channel 33 where the oxidizing fluid flows through, wherein the supply opening 11A that serves as an inlet of the fuel fluid channel 31 and the exhaust opening 11B that serves as an exit of the fuel fluid channel 31 (refer to Fig. 18 (A)), and the supply opening 12A that serves as an inlet of the cooling medium channel 32 and the exhaust opening 12B that serves as an exit of the cooling medium channel 32 (refer to Fig. 18 (C)), are all blocked by the sealing material 19, for supplying and exhausting the oxidizing fluid to the cell unit 8, so that the fuel fluid and the cooling medium do not flow into the channel 33 of the oxidizing fluid.

Fig. 18 (C) illustrates the channel 32 where the cooling medium flows through, wherein the supply opening 11A that serves as an inlet of the fuel fluid channel 31 and the exhaust opening 12B that serves as an exit of the fuel fluid channel 31 (refer to Fig. 18 (A)), and the supply opening 13A that serves as an inlet of the oxidizing fluid channel 33 and the exhaust opening 13B that serves as an exit of the oxidizing fluid channel 31 (refer to Fig. 18 (B)), are all blocked by the sealing material 19, for circulating the cooling medium to the cell unit 8, so that the fuel fluid and the oxidizing fluid do not flow into the channel 32 of the cooling medium.

Fig. 18 (A) shows the sealing portions of the channel 31 through which the fuel fluid flows, the fuel fluid supply opening 11A and the fuel fluid exhaust opening 11B. By connecting the openings 11A and 11B above the channel 31 without sealing, and by sealing the openings 11A and 11B above the channel 32 and the channel 33, the supply and exhaust of the fuel fluid to the cell unit 8 is realized. A flow route for the fuel fluid is in the following order: the supply internal common manifold 41A, the supply opening 11A, the channel 31, the exhaust opening 11B, and the exhaust internal common manifold 41B. As a result of this, the supplied fuel fluid reaches the anode catalyst layer 2 via the anode side gas diffusion layer 4, where the hydrogen oxidation reaction that separates electron from the fuel fluid is promoted, and electron moves to the external circuit. The cell unit 8 generates power accordingly.

Fig. 18 (B) shows the sealing portions of the channel 33 through which the oxidizing fluid flows, the oxidizing fluid supply opening 13A and the oxidizing fluid exhaust opening 13B. By connecting the openings 13A and 13B above the channel 33 without sealing, and by sealing the openings 13A and 13B above the channel 31 and the channel 32, the supply and exhaust of the oxidizing fluid to the cell unit 8 is realized. A flow route for the oxidizing fluid is in the following order: the supply internal common manifold 43A, the supply opening 13A, the channel 33, the exhaust opening 13B, and the exhaust internal common manifold 43B. As a result of this, the supplied oxidizing fluid reaches the cathode catalyst layer 3 via the cathode side gas diffusion layer 5, where the oxygen reduction reaction that generates water from proton, electron and oxygen is promoted. The cell unit 8 generates power accordingly.

Fig. 18 (C) shows the sealing portions of the channel 32 through which the cooling medium flows, the cooling medium supply opening 12A and the cooling medium exhaust opening 12B. By connecting the openings 12A and 12B above the channel 32 without sealing, and by sealing the openings 12A and 12B above the channel 31 and the channel 33, the circulation of the cooling medium between the cell units 8 is realized. A flow route for the cooling medium is in the following order: the supply internal common manifold 42A, the supply opening 12A, the channel 32, the exhaust opening 12B, and the exhaust internal common manifold 42B.

### [External Common Manifolds]

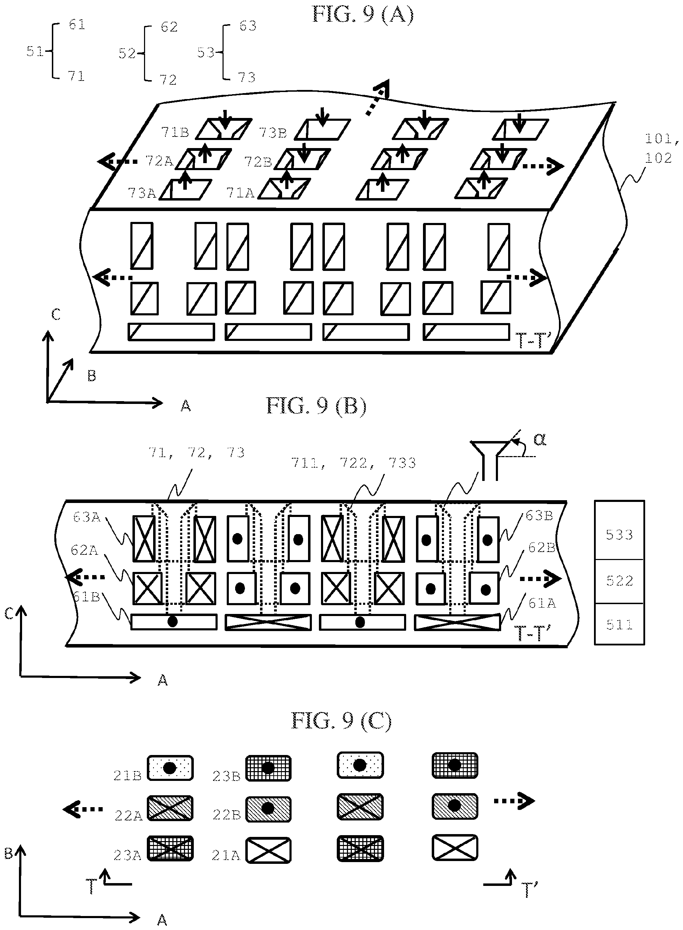

Next, the external common manifolds 51, 52, 53 related to the present invention will be described with reference to Figs. 9 to 12. The dotted arrow in the drawings of Figs. 3 to 12 indicates a portion where the repeating portion is abbreviated, due to the limitation in drawing capability. The dotted arrow does not imply that the abbreviated portion is repeated infinitely. Also, a wave-shaped profile shown on the external common manifolds 51, 52, 53 of Figs. 9 to 12 indicates the abbreviated portion.

Both ends of the cell stack structure body 9 are sandwiched by the endplates 101 (the first endplate) and 102 (the second endplate). The supply external common manifold for fuel fluid 51A, the supply external common manifolds for cooling medium 52A, the supply external common manifolds for oxidizing fluid 53A, the exhaust external common manifolds for fuel fluid 51B, the exhaust external common manifolds for cooling medium 52B, and the exhaust external common manifolds for oxidizing fluid 53B are provided to these endplates 101, 102. The endplates 101, 102 have the roles of holding tightly the cell stack structure body 9 from two directions for stacking the cell units 8 from above and below, and functioning as a current collector for the electrodes. The external common manifolds 51, 52, 53 installed to the endplates 101, 102 allow various fluids to be distributed to the stacked functional layers of the cell unit 8. In the embodiments of the present invention, the endplates 101, 102 are regarded as having a double role of the endplates 101, 102 and the external common manifolds 51, 52, 53.

As already described, the basic unit 16 having a regularity of Bravais lattice within 2 dimensions is applied to the openings 11, 12, 13, in the plane of the cell unit 8 in repeat. Therefore, as a matter of course, the internal common manifolds 41, 42, 43 are formed by repeating the basic unit 16, by correspond to the number of openings 11, 12, 13 provided on a single cell unit 8. Furthermore, since the internal common manifolds 41, 42, 43 are connected to the external common manifolds 51, 52, 53 via the connection ports 21, 22, 23, therefore, as a matter of course, the pipes for connecting with internal common manifolds 71, 72, 73 (the first pipes) are formed by repeating the basic unit having the regularity of Bravais lattice, by corresponding to the number of openings 11, 12, 13 provided on a single cell unit 8 and the number of internal common manifolds 41, 42, 43 (refer to Figs. 9 to 12).

There is one exception. The basic unit 16 having the regularity of Bravais lattice within 2 dimensions is not applied to the pipes for connecting with external BOP 61, 62, 63 (the second pipes) which will be described later. The pipe for connecting with internal common manifolds 71, 72, 73 that have applied the basic unit 16 having the regularity of Bravais lattice penetrates the pipe for connecting with external BOP 61, 62, 63 that have not adopted the basic unit 16 having the regularity of Bravais lattice.

Figs. 9 (A) to 12 (A) illustrate the 3-dimensional drawings showing the formation of external common manifolds for various fluids 51, 52, 53 in the endplates 101, 102, according to the embodiments of the present invention. As is apparent from Figs. 9 (A) to 12 (A), the external common manifolds 51, 52, 53 are provided with the pipes for connecting with external BOP 61, 62, 63, along the direction B. The external common manifolds 51, 52, 53 are provided with the pipes for connecting with internal common manifolds 71, 72, 73, along the direction C. Figs. 9 to 12 are based on the schematic drawings for explaining the regularity of arrangement of the openings 11, 12, 13 formed on the plane of the cell unit 8 of Fig. 4.

BOP is an abbreviation for "Balance of Plant". It is a name given to the power generation auxiliary devices such as pump for supplying fuel and air and electrical circuit for controlling the power generation. BOP denotes peripheral devices of the power system such as modifier, blower, booster, humidifier, heat exchanger, DC-AC converter, and so forth.

The pipe for connecting with external BOP 61, 62, 63 is extended and formed along the direction B intersecting the channels of various fluids (the fuel fluid, the cooling medium and the oxidizing fluid) 31, 32, 33 within the cell unit 8. The direction B is the same direction as the row F and the row G (see Fig. 4) comprised of the openings 11, 12, 13. The pipes for connecting with external BOP for various fluids 61, 62, 63 are installed in parallel or semi-parallel to one another to avoid contact between them.

What we mean by mentioning "installed in semi-parallel" is that the pipes are being installed by deviating from the direction B and this is the results of oblique working on the pipes. Even if the pipes for connecting with external BOP 61, 62, 63 are installed in semi-parallel, the connection with the pipes for connecting with internal common manifolds 71, 72, 73 are adjusted, and the flow may improve in some cases.

The pipes for connecting with internal common manifolds 71, 72, 73 are extended and formed along the stacking direction of the cell unit 8 so as to extend the internal common manifolds 41, 42, 43. The pipes for connecting with internal common manifolds 71, 72, 73 are provided for various fluids, and these pipes are installed in parallel or semi-parallel to one another to avoid contact between them.

Examples shown in Figs. 9 to 12 depict the examples where the pipes for connecting with external BOP for various fluids 61, 62, 63 are arranged in parallel with one another. The pipes for connecting with internal common manifold for various fluids 71, 72, 73 are arranged in parallel with one another. And, the pipe for connecting with external BOP for the same fluid 61, 62, 63 intersects the pipe for connecting with internal common manifold for the same fluid 71, 72, 73 at an angle of 90 degrees. However, the embodiments of the present invention are not limited to these examples. The intersecting angle can be set, for example, within the range of 1 to 90 degrees.

Fig. 9 (A) is a partial 3-dimensional view showing the formation of the external common manifolds for various fluids 51, 52, 53 in the endplates 101, 102, according to the embodiments of the present invention.

Fig. 9 (C) is a schematic plan drawing showing the arrangement of connection ports 21, 22, 23 that coincide with the pipes for connecting with external common manifolds 71, 72, 73 of Fig. 9 (A). Specifically, the fuel fluid supply connection port 21A and the fuel fluid exhaust connection port 21B, the cooling medium supply connection port 22A and the cooling medium exhaust connection port 22B, and the oxidizing fluid supply connection port 23A and the oxidizing fluid exhaust connection port 23B correspond to the pipes for connecting with internal common manifolds 71, 72, 73 shown in Fig. 9 (A). In Fig. 9 (A), the short upward arrows indicate the supplying direction to the cell stack structure body 9 and correspond to the supply connection port for various fluids 21A, 22A, 23A expressed in X of Fig. 9 (C). In Fig. 9 (A), the downward arrows indicate the exhausting direction out from the cell stack structure body 9 and correspond to the exhaust connection ports for various fluids 21B, 22B, 23B expressed in black circle of Fig. 9 (C). A line T-T' indicated on Fig 9(C) shows the direction of the projection drawing for the endplates 101, 102 of Fig. 9 (B).

Fig. 9 (B) illustrates in projected view when forming the external common manifolds for various fluids 51, 52, 53 in the endplates 101, 102. On this projected view seen from T-T' side of Fig. 9 (C), a visible line from the cross section is indicated by a solid line, and an invisible line is supplemented by a broken line. According to this projected view, the width sizes of the pipes for connecting with internal common manifold 71, 72, 73 in the 2 directions of A-axis are changed stepwisely by dividing the endplate 102 into a first zone 511, a second zone 522, to a third zone 533. The width sizes in the 2 directions of A-axis are increased stepwisely in the 2 directions of A-axis from the first zone 511 positioned most apart from the cell stack structure body 9, via the second zone 522 which is an intermediate position, to the third zone 533 positioned closest to the cell stack structure body 9, respectively. The position relationship of the respective zones is indicated on the right-hand side of Fig. 9 (B). Further, the pipe for connecting with external BOP for cooling medium 62 sets the width size of the pipe for connecting with internal common manifold for fuel fluid 71 positioned at the first zone 511 as a reference line, and is set back with respect to the reference line, along the 2 directions of A-axis. The pipe for connecting with external BOP for oxidizing fluid 63 sets the width size of the pipe for connecting with internal common manifold for cooling medium 72 positioned at the second zone 522 as a reference line, and is set back with respect to the reference line, along the 2 directions of A-axis.

As shown in Fig 9 (B), the pipes for connecting with external BOP 61, 62, 63 and the pipes for connecting with internal common manifold 71, 72, 73 are connected perpendicular to each another. The fuel_fluid_supply pipe for connecting with internal common manifold 71A penetrates the center of the fuel_fluid_supply pipe for connecting with external BOP 61A positioned in the first zone 511. Then, the cooling_medium_exhaust pipe for connecting with internal common manifold 72B penetrates at the edge of the cooling medium exhaust pipe for connecting with external BOP 62B positioned in the second zone 522. Further, the oxidizing_fluid_exhaust pipe for connecting with internal common manifold 73B penetrates the edge of the oxidizing _fluid _exhaust pipe for connecting with external BOP 63B positioned at the third zone 533. Although this is not illustrated, however, the pipes for connecting with external common manifolds 61, 62, 63 and the pipes for connecting with internal common manifolds 71, 72, 73 can be connected at the acute inclined angles to each other. Although this is not illustrated, however, the pipes for connecting with internal common manifolds 71, 72, 73 may penetrate the pipes for connecting with external BOP 61, 62, 63 at their center portions approximately or at their edge portions approximately, or may penetrate a portion between these two portions.

The cross-sectional areas of external common manifolds for various fluids 51, 52, 53 are preferably determined based on the change in the amount of flow for various fluids described above. The fuel fluid is consumed during its flow path so that the amount of fuel fluid flow changes. At the external common manifold for fuel fluid 51 having a prominent flow change, all composition of fuel fluid can be consumed during its flow, however, since the flow speed is fast so that the cross-sectional area for the external common manifold for fuel fluid 51 is preferably set small to allow a fuel fluid supply at a constant pressure. The cooling medium is not consumed during the power generation. The cooling medium without change in the amount of flow is preferably set between the external common manifold for fuel fluid 51 and the external common manifold for oxidizing fluid 53 to increase the cooling efficiency and to exhibit the cooling effect from both sides of the external common manifold for cooling medium 52. The larger the surface area of the external common manifold the greater the cooling effect, therefore, the cross-sectional area is set large. As for the external common manifold for oxidizing fluid 53, the most fluid is not consumed while the oxygen which is a part of the whole component is consumed, so the amount of decrease is smaller as compared to the external common manifold for fuel fluid 51. That is, in order to appropriately supply the oxidizing fluid with less oxygen content, the cross-sectional area of the external common manifold for oxidizing fluid 53 is preferably set large.

There are endplates 101, 102 at both ends of the cell stack structure body 9, therefore, the supply external common manifolds for various fluids 51A, 52A, 53A and the exhaust external common manifolds for various fluids 51B, 52B, 53B can be installed to one of the endplates 101, 102. Alternatively, these external common manifolds 51, 52, 53 can be provided by separately arranging them to the endplates 101, 102. To give a specific example, the fuel fluid supply external common manifold 51A and the fuel fluid exhaust external common manifold 51B can be provided to the endplate 101, and the cooling medium supply external common manifold 52A and the cooling medium exhaust external common manifold 52B and the oxidizing fluid supply external common manifold 53A and the oxidizing fluid exhaust external common manifold 53B can be installed at the endplate 102.

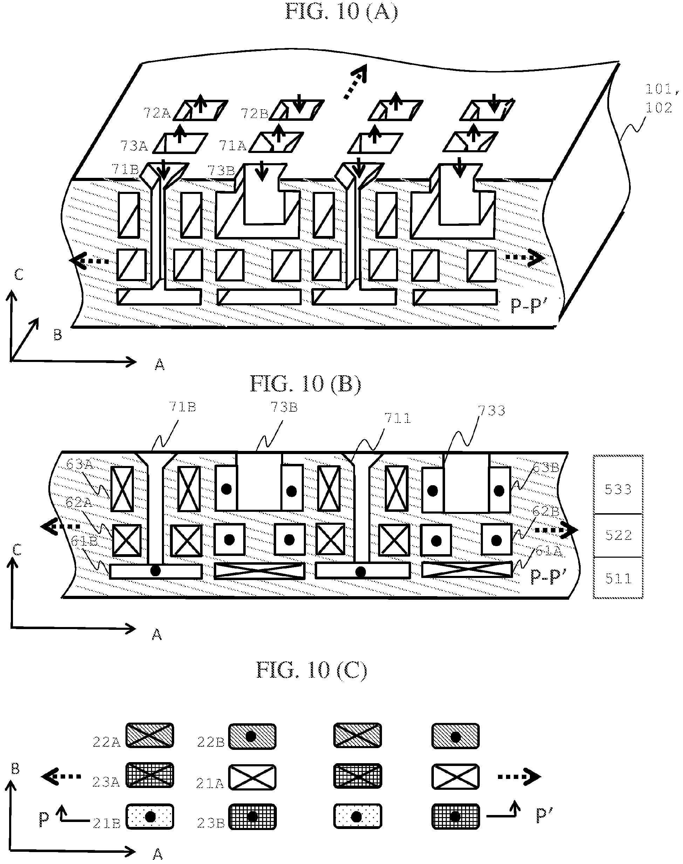

Fig. 10 (A) illustrates a partial 3-dimensional view showing the formation of external common manifolds for various fluids 51, 52, 53 in the endplates 101 or 102, according to the embodiments of the present invention. Fig. 10 (B) illustrates a cross-sectional view P-P' showing the formations of a joint between the fuel_fluid_exhaust pipe for connecting with internal common manifold 71B and the fuel_fluid_exhaust pipe for connecting with external BOP 61B, and a joint between the oxidizing_fluid_exhaust pipe for connecting with internal common manifold 73B and the oxidizing_fluid_exhaust pipe for connecting with external BOP 63B, in the endplates 101 or 102, according to the embodiments of the present invention. At the first zone 511 positioned most apart from the cell stack structure body 9, the fuel_fluid_exhaust pipe for connecting with internal common manifold 71B has the smallest width size compared to the width sizes of the pipes for connecting with internal common manifold for the cooling medium and the oxidizing fluid 72 and 73, and penetrates the fuel_fluid_exhaust pipe for connecting with external BOP 61B. In the third zone 533 positioned closest to the cell stack structure body 9, the oxidizing_fluid_exhaust pipe for connecting with internal common manifold 73B has the greatest width size compared to the width sizes of the pipes for connecting with internal common manifold for the fuel fluid and the cooling medium 71, 72, and penetrates the oxidizing_fluid_exhaust pipe for connecting with external BOP 63B.

Fig. 10 (C) illustrates a schematic plan drawing showing the arrangement of connection ports 21, 22, 23 that coincides with the pipes for connecting with the internal common manifold 71, 72, 73 of Fig. 10 (A). The fuel fluid supply connection port 21A and the fuel fluid exhaust connection port 21B, the cooling medium supply connection port 22A and the cooling medium exhaust connection port 22B, and the oxidizing fluid supply connection port 23A and the oxidizing fluid exhaust connection port 23B illustrated in Fig. 10(C) correspond to the pipes for connecting with internal common manifolds 71, 72, 73 depicted in Fig. 10 (A). In Fig. 10 (A), short upward arrows indicate the supplying direction to the cell stack structure body 9 and coincide with the supply connection ports for various fluids expressed in X of Fig. 10 (C). In Fig. 10 (A), downward arrows indicate the exhausting direction out from the cell stack structure body 9 and coincide with the exhaust connection ports for various fluids expressed in black circle of Fig. 10 (C). The cross section cut through P-P' on Fig. 10 (C) is shown on Fig.10 (B).

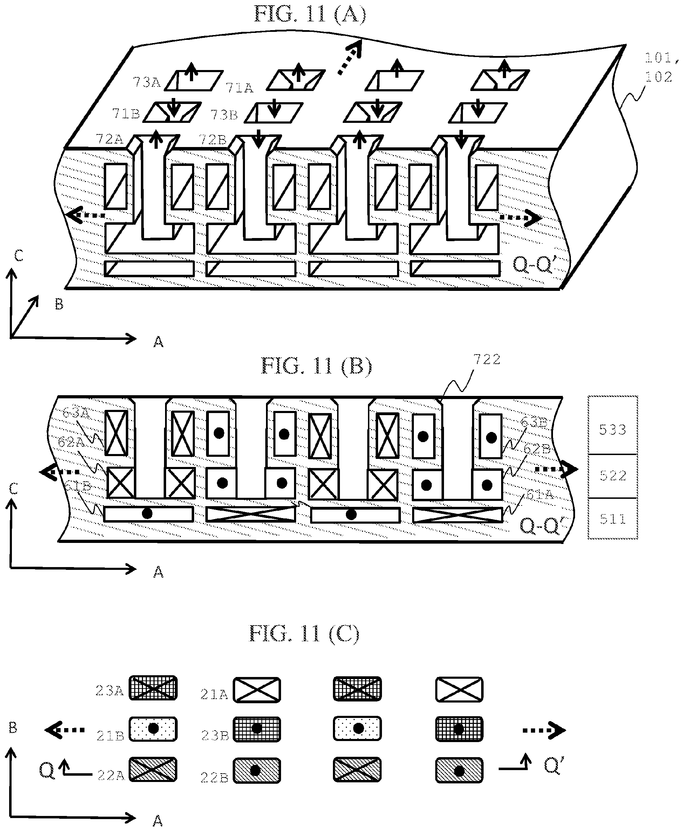

Fig. 11 (A) illustrates a partial 3-dimensional view showing the formation of external common manifolds for various fluids 51, 52, 53 in the endplates 101 or 102, according to the embodiments of the present invention. Fig. 11 (B) illustrates a cross-sectional view Q-Q' showing the formations of a joint between the cooling medium supply pipe for connecting with internal common manifold 72A and the cooling_medium_supply pipe for connecting with external BOP 62A and a joint between the cooling_medium_exhaust pipe for connecting with internal common manifold 72B and the cooling_medium_exhaust pipe for connecting with external BOP 62B, in the endplates 101 or 102, according to the embodiments of the present invention. In the second zone 522 at the intermediate position from the cell stack structure body 9, the cooling medium supply pipe for connecting with internal common manifold 72A has a greater width size compared with the width size of the pipe for connecting with internal common manifold for the fuel fluid 71 and has a smaller width size compared with the width size of the pipes for connecting with internal common manifold for the oxidizing fluid 73, and penetrates the cooling_medium_supply pipe for connecting with external BOP 62A. At the adjacent position in the 2 directions of A-axis, there is the cooling_medium_exhaust pipe for connecting with internal common manifold 72B which has a greater width size compared with the width size of the pipes for connecting with internal common manifold for the fuel fluid 71 and which has a smaller width size compared to the width size of the pipes for connecting with internal common manifold for the oxidizing fluid 73, and penetrates the cooling_medium_exhaust pipe for connecting with external BOP 62B.

Fig. 11 (C) illustrates a schematic plan drawing showing the arrangement of connection ports 21, 22, 23 that coincides with the pipes for connecting with the internal common manifold 71, 72, 73 of Fig. 11 (A). The cross section cut through Q-Q' on Fig. 11 (B) is shown on Fig.11 (C). The same reference number is designated to those parts identical to Figs. 10 (A) to (C) and the explanations are omitted in part.

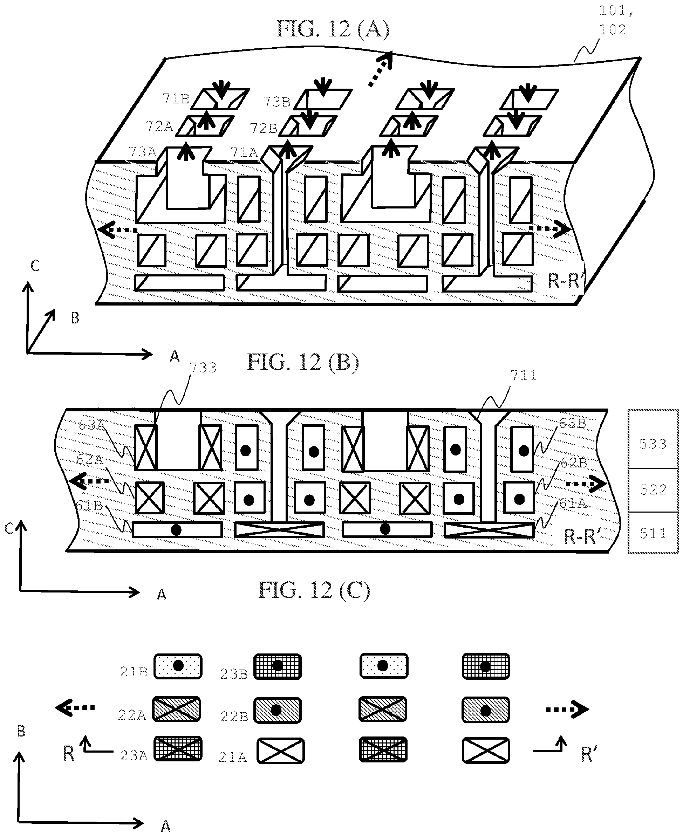

Fig. 12 (A) illustrates a partial 3-dimensional drawing showing the formation of external common manifolds for various fluids 51, 52, 53 in the endplates 101 or 102, according to the embodiments of the present invention. Fig. 12 (B) illustrates a cross-sectional view R-R' showing the formations of a joint between the oxidizing_fluid_supply pipe for connecting with internal common manifold 73A and the oxidizing_fluid_supply pipe for connecting with external BOP 63A and a joint between the fuel_fluid_supply pipe for connecting with internal common manifold 71A and the fuel_fluid_supply pipe for connecting with external BOP 61A, in the endplates 101 or 102, according to the embodiments of the present invention. In the first zone 511 positioned most apart from the cell stack structure body 9, the fuel_fluid_supply pipe for connecting with internal common manifold 71A has the smallest width size compared with the width sizes of the pipes for connecting with internal common manifold for the cooling medium and the oxidizing fluid 72, 73, and penetrates the fuel_fluid_supply pipe for connecting with external BOP 61A. In the third zone 533 positioned closest to the cell stack structure body 9, the oxidizing_fluid_supply pipe for connecting with internal common manifold 73A has the greatest width size compared to the width sizes of the pipes for connecting with internal common manifold for the fuel fluid and the cooling medium 71, 72, and penetrates the oxidizing_fluid_supply pipe for connecting with external BOP 63A.

Fig. 12 (C) illustrates a schematic plan drawing showing the arrangement of connection ports 21, 22, 23 that coincides with the pipes for connecting with the internal common manifold 71, 72, 73 of Fig. 12 (A). The cross section cut through R-R' on Fig. 12(B) is shown on Fig.12 (C). The same reference number is designated to those parts identical to Figs. 10 (A) to (C) and the explanations are omitted in part.

As already defined, in this specification document, the connections between the external common manifold for various fluids 51, 52, 53 and the internal common manifold for various fluids 41, 42 43 are called "connection ports 21, 22, 23". In order not to cause interference with the external common manifolds 51, 52, 53, the width sizes of the pipes for connecting with internal common manifold 71, 72, 73 need be changed. There are cases in which the width sizes of the pipes for connecting with internal common manifold 71, 72, 73 do not coincides with the width size of the connection ports 21, 22, 23, which is the structure of internal common manifold side. Accordingly, the pipes for connecting with the internal common manifold 71, 72, 73 need to match in the shape and size between the two by changing the shape of the coupling part 711, 712, 713 with the connection ports 21, 22, 23. As shown in Fig. 9(B), the pipe for connecting with internal common manifold for the fuel fluid 71 has a greater width size than the with sizes of the pipes for connecting with internal common manifolds for the cooling medium and the oxidizing fluid 72, 73, therefore, an inclined plane is lengthened towards the coupling part 711, the inclination angle alpha (α) of the inclined plane is 90 degrees and less, and prepared at 2 locations in the left and right directions (along B-axis). As shown in Fig. 9 (B), the pipe for connecting with internal common manifold for the cooling medium 72 has a greater width size than the width size of the pipe for connecting with internal common manifold for the fuel fluid 71, and has a smaller width size than the width size of the pipe for connecting with internal common manifold for the oxidizing fluid 73, therefore, the inclined plane is appropriately formed towards the coupling part 712, the inclination angle alpha (α) of the inclined plane is 90 degrees and less, and prepared at 2 locations in the left and right directions (along B-axis). As shown in Fig. 9(B), the pipe for connecting with internal common manifold for the oxidizing fluid 73 has a greater width size than the width size of the pipes for connecting with internal common manifold for the cooling medium and the fuel fluid 72, 71, therefore, the inclined plane is not formed at the coupling part 713 but is directly coupled to the connection port 23. The above-described contents are only one example, and this is not always the case. Alternatively, instead of forming the inclined plane, a squared shape or a rounded shape can be formed at the above-mentioned connection ports to be connected to the internal common manifolds 41, 42, 43 without the inclination.

Hereinbelow, the first and the second embodiments of the present invention will be described with reference to the attached drawings of Figs. 1 to 18. However, the present invention is not limited to the first and second embodiments only.

### First Embodiment

The stacked-type fuel cell of the first embodiment will be described based on the structural concepts explained above, with reference to the drawings Figs. 1 to 18.

As already described, the cell unit 8 according to one of the embodiments of the present invention can be formed by arranging two electrode catalyst layers 2 and 3 at both sides of the electrolyte membrane 1, and the gas diffusion layers 4 and 5 at the outer side of the electrode catalyst layers 2 and 3, and the pair of separators 6 and 7 that further sandwiches them between. In other words, it is the cell unit 8 according to one of the embodiments of the present invention that has the fuel cell's power generation function. Fig.2 illustrates a cross-sectional view for explaining the channels for supplying various fluids (that is, a fuel fluid flow 31, a cooling medium flow 32, and a oxidizing fluid flow 33), between each layer of cell unit 8 and between a plurality of cell units 8.

As shown in Fig. 1(B), the cell unit 8 is laminated by 7 layers in the following order, namely: a separator 6 or 7, a gas diffusion layer 4 or 5, an electrode catalyst layer 2 or 3, an electrode membrane 1, an electrode catalyst layer 2 or 3, a gas diffusion layer 4 or 5, and a separator 6 or 7. The cell unit 8 can be made at a thickness thinner than the thickness of the commonly used cell today. The cell unit 8 can be made at a thickness that is much thinner than the thickness of commonly used cell units.

The polymer electrolyte membranes 1 can be roughly classified into fluorine-based polymer electrolyte membranes and hydrocarbon-based polymer electrolyte membranes. As the fluorine-based polymer electrolyte membrane, there can be included films of perfluorocarbon sulfonic acid polymers such as Nafion (trade name; manufactured by DuPont CO., Ltd.), Flemion (trade name; manufactured by ASAHI GLASS CO., LTD), and Aciplex (trade name; manufactured by Asahi Kasei Corporation.), perfluorocarbon phosphonic acid polymers, trifluorostyrene sulfonic acid polymers, ethylene tetrafluoroethylene-g-styrenesulfonic acid polymers, an ethylene-tetrafluoroethylene copolymer, polyvinylidene fluoride perfluorocarbon sulfonic acid polymers, and the like.

On the other hand, as the hydrocarbon-based polymer electrolyte membrane, there can be included perfluorinated type, semifluorinated type and hydrocarbon type.

In the present invention, both the fluorine-based and hydrocarbon-based polymer electrolyte membranes can be used as the polymer electrolyte membrane. Electrolytes can be used alone or in combination of two or more. A fluorine-based and hydrocarbon-based copolymer structure or a pore filling membrane using a porous support membrane may also be used.

The gas diffusion layer generally consists of a support layer and a microporous layer having a smaller average pore diameter than that of the support layer. The support layer is preferably constituted of a conductive carbon base material having a pore size distribution of 100 nm or more and 90 µm or less, and water-repellent treated carbon cloth, carbon paper, carbon nonwoven cloth, and so forth, can be used.

As separators, for example, various metal sheet, metal foil or metal film such as aluminum, copper, and stainless can be used. Such metal sheet, metal foil or metal film is preferably made from conductive material having high resistance to corrosion and mechanical strength. Further, the metal sheet, metal foil or metal foil is preferably coated and the surface is processed physically and chemically for increasing even more the conductivity, the resistance to corrosion, and the mechanical strength. Channels are formed on the separators, and the channels are comprised of projected portion and dented portion. Methods of forming the separators are cutting process, painting, printing, etching, press processing, and so forth.

The catalyst layer includes the cathode catalyst layer and the anode catalyst layer, and comprises a structure in which a catalyst component such as platinum which is held on the surface of a conductive carrier consisting of carbon. The cathode catalyst layer promotes the oxygen reduction reaction (a reaction that generates water from protons, electrons and oxygen). The anode catalyst layer promotes the hydrogen oxidation reaction (a reaction that dissociates hydrogen into protons and electrons).

Several hundreds of cell units 8 formed accordingly are stacked up to be used in fuel cells for vehicles. On each one of the cell units 8, there are openings 11, 12, 13 formed by following the basic unit 16 of Bravais lattice within 2 dimensions, the sealing process is applied in the vicinity of the openings 11, 12, and 13, and the openings 11, 12, 13 are placed together following the stacking process of cell units 8. As the results of this, the internal common manifolds 41, 42, 43 are disposed in the cell stack structure body 9. Refer to [Internal Common Manifolds] section in the present specification for the specific details of the structure and mechanism of the internal common manifolds 41, 42, 43. As a manufacturing method of the openings 11, 12, 13 formed on such a cell unit 8, there is, for example, machine processing, laser processing, etching, and so forth. Various organic sealing materials, inorganic sealing materials and combination of organic and inorganic mixed sealing materials can be used in the sealing process method applied in the vicinity of the openings 11, 12, and 13, alternatively, the sealing adherence process can be implemented after carrying out processing such as machine processing, laser processing, etching and so forth.

The openings 11, 12, 13 installed on the cell unit 8 formed accordingly are put together one by one, and the internal common manifolds 41, 42, 43 illustrated in Figs. 6 and 7 are disposed in the cell stack structure body 9. Various fluids flowing through the internal common manifolds 41, 42, 43 are supplied to and exhausted from the cell unit 8 via their respective supply openings 11A, 12A, 13A and the exhaust openings 11B, 12B and 13B. As described previously in Fig. 18, the flows of various fluids in and out of the cell unit 8 are controlled by the sealing material 19. By applying the basic unit 16 having the regularity of Bravais lattice within 2 dimensions shown in Figs. 3 to 5 in repeat in designing the layout of the openings 11, 12, 13 on the cell unit 8 that constitute the internal common manifolds 41, 42, 43, the various fluid flow passing through the internal common manifolds 41, 42 43 are promoted. Also, the effective area of the catalyst layer of the cell unit 8 can be maximized.

Next, the internal common manifolds 41, 42, 43 formed accordingly are connected to the external common manifolds 51, 52, 53 via the connection ports 21, 22, 23. As is apparent from Figs. 9(A) to 12(A), the pipes for connecting with external BOP 61, 62, 63 are disposed in the external common manifolds 51, 52, 53, along the direction B.

The pipes for connecting with internal common manifold 71, 72, 73 are disposed in the external common manifolds 51, 52, 53, along the direction C.

As shown in Fig. 9 (B), the pipes for connecting with external BOP 61, 62, 63 and the pipes for connecting with internal common manifold 71, 72, 73 are connected perpendicular to one another. The pipes for connecting with internal common manifolds 71, 72, 73 penetrate the pipes for connecting with external BOP 61, 62, 63 at their center portions or edge portions.

As described above, the effect of penetrating the pipes for connecting with internal manifold 71, 72, 73 with the pipes for connecting with external BOP 61, 62, 63 is to prevent turbulent flow of various fluids. The pipes for connecting with external BOP 61, 62, 63 can be installed on the same end plate 101, 102 as three kinds of inflow ports and out-flow ports.

Refer to [External Common Manifolds] section in the present specification for the specific details of the structure and mechanism of the external common manifolds 51, 52, 53.

The pipes for connecting with external BOP 61, 62, 63 and the pipes for connecting with internal common manifold 71, 72, 73 disposed in the external common manifolds 51, 52, 53 can be manufactured, for example, by using the cutting process. Alternatively, the external common manifolds 51, 52, 53 may be formed in the endplates 101, 102, by molding process or by using a 3D printer.

### Second Embodiment

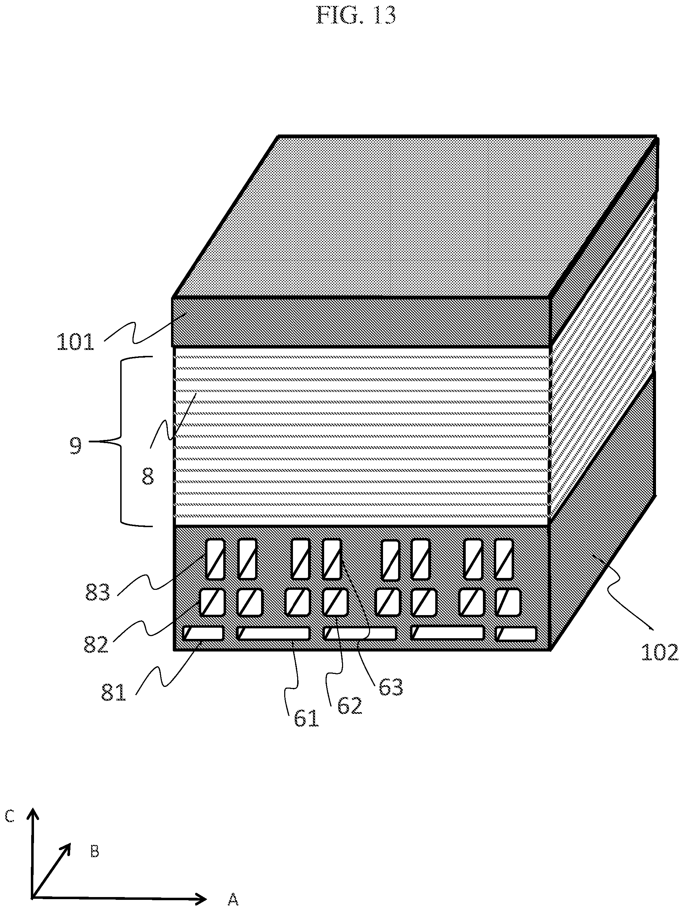

Next, the stacked-type fuel cell of the second embodiment will be described with reference to Figs. 13 to 17.

Fig. 13 illustrates an external view of the stacked-type fuel cell, according to the second embodiment.

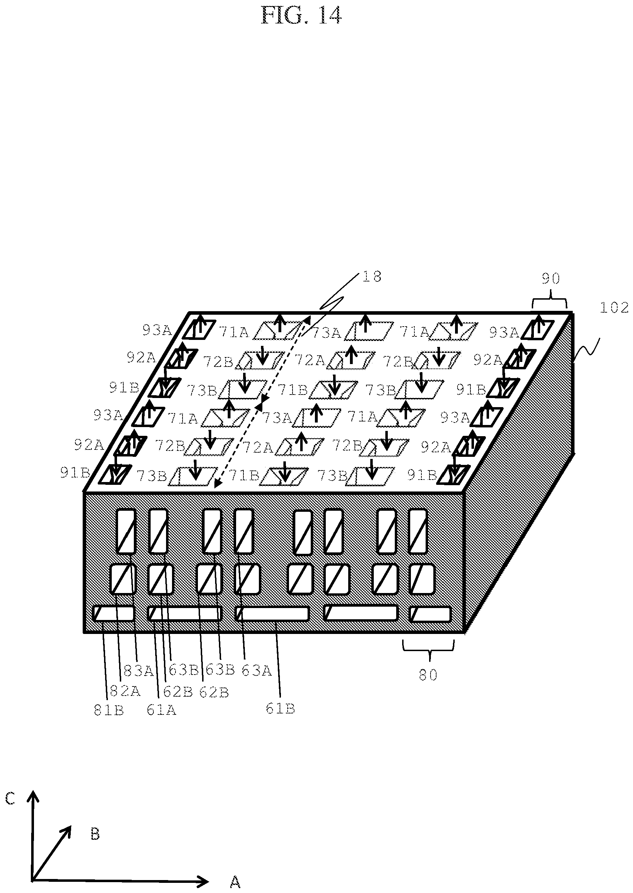

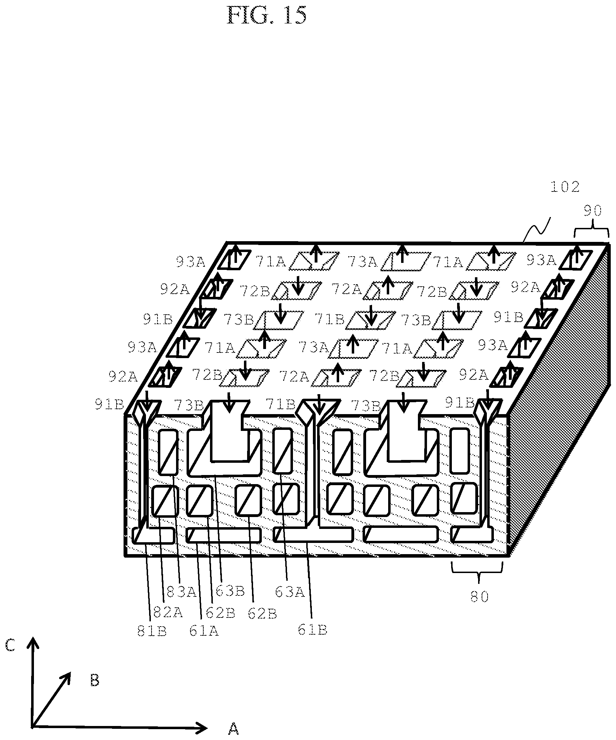

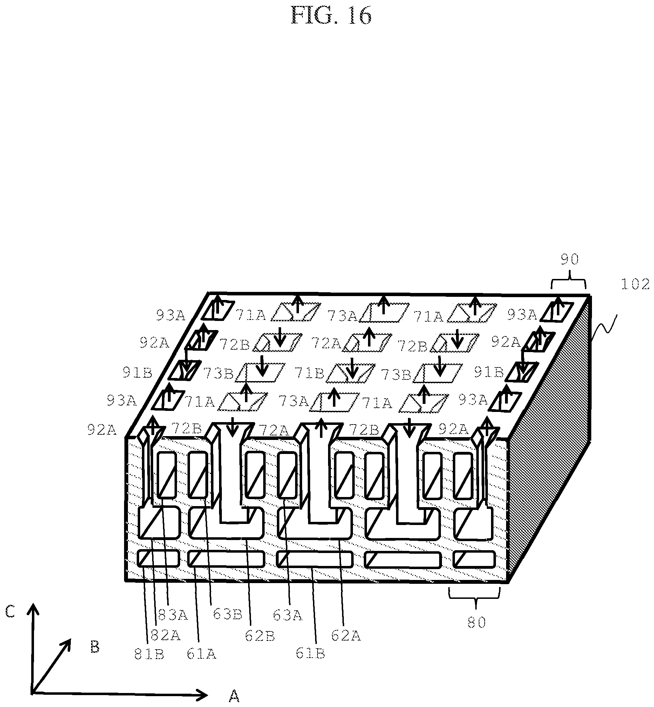

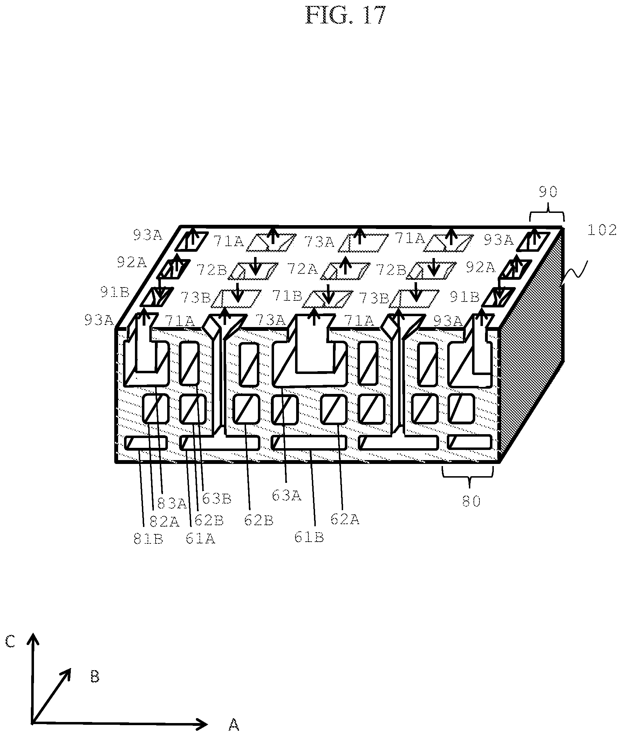

Fig. 14 illustrates an external view showing the situation in which the cell stack structure body 9 is removed from the stacked-type fuel cell of the second embodiment 2 of the present invention shown in Fig. 13. Fig. 15 illustrates a 3-dimensional drawing in cross section showing the formation of external common manifolds 51, 52, 53 in the endplate 102, according to the second embodiment. Fig. 16 illustrates a 3-dimensional drawing in cross section showing the formation of external common manifolds for various fluids 51, 52, 53 in the endplate 102, according to the second embodiment. Fig. 17 illustrates a 3-dimensional drawing in cross section showing the formation of external common manifolds for various fluids 51, 52, 53 in the endplate 102, according to the second embodiment. The same reference sign is used, and the explanation is omitted in part for the components that are common to the components shown in the drawings of Figs. 1 to 12 and 18.

According to the second embodiment shown in Fig. 13 to 17, the edge structures of the internal common manifolds 41, 42, 43 and the external common manifolds 51, 52, 53 are the main point of difference. Other parts are mostly identical to the first embodiment described in Figs. 1 to 12 and 18.

As shown in Fig. 13, the stacked-type fuel cell of the second embodiment has the cell stack structure body 9 formed by stacking the cell units 8 and this is sandwiched by the endplates 101, 102. In the second embodiment, the external common manifolds 51, 52, 53 are not installed in the endplate 101. The external common manifolds are arranged in the endplate 102.

Figs. 15 to 17 illustrate the cross-sectional drawings showing the connection of the pipe for connecting with external BOP 61, 62, 63 and the pipe for connecting with internal common manifold 71, 72, 73, positioned at the intermediate portion of the endplate 102. Also in the same drawings, the cross-sectional drawings are illustrated, showing the connection of the pipe for connecting with external BOP 81, 82, 83 and the pipe for connecting with internal common manifold 91, 92, 93, positioned at the edge portion of the endplate 102.

Fig. 15 illustrates a cross-sectional view showing the formations of a joint between the fuel_fluid_exhaust pipe for connecting with internal common manifold 91B and the fuel fluid exhaust pipe for connecting with external BOP 81B at the edge portion, and a joint between the fuel_fluid_exhaust pipe for connecting with internal common manifold 71B and the fuel fluid exhaust pipe for connecting with external BOP 61B at the intermediate portion, and a joint between the oxidizing_fluid_exhaust pipe for connecting with internal common manifold 73B and the oxidizing_fluid_exhaust pipe for connecting with external BOP 63B at the intermediate portion, in the endplate 102, according to the second embodiment of the present invention.

Fig. 16 illustrates a cross-sectional view showing the formations of a joint between the cooling_medium_supply pipe for connecting with internal common manifold 92A and the cooling_medium_supply pipe for connecting with external BOP 82A at the edge portion, and a joint between the cooling_medium_exhaust pipe for connecting with internal common manifold 72B and the cooling_medium_exhaust pipe for connecting with external BOP 62B at the intermediate portion, and a joint between the cooling_medium_supply pipe for connecting with internal common manifold 72A and the cooling_medium_supply pipe for connecting with external BOP 62A at the intermediate portion, in the endplate 102, according to the second embodiment of the present invention.

Fig. 17 illustrates a cross-sectional view showing the formations of a joint between the oxidizing_fluid_supply pipe for connecting with internal common manifold 93A and the oxidizing_fluid_supply pipe for connecting with external BOP 83A at the edge portion, and a joint between the fuel_fluid_supply pipe for connecting with internal common manifold 71A and the fuel_fluid_supply pipe for connecting with external BOP 61A at the intermediate portion, and a joint between the oxidizing_fluid_supply pipe for connecting with internal common manifold 73A and the oxidizing_fluid_supply pipe for connecting with external BOP 63A at the intermediate portion, in the endplate 102, according to the second embodiment of the present invention.

The edge structure of the second embodiment will be described by using Figs. 14 to 17. In reality, the extension within 2 dimensions for cell stack structure body 9 is finite. There always exists an edge. The edge must be installed at both the internal common manifolds 41, 42, 43 and the external common manifolds 51, 52, 53 for evenly supplying various fluids supplied from the external BOP serving as external supply source to the cell stack structure body 9 that is formed by stacking up the cell units 8, and for evenly exhausting various fluids exhausted from the cell stack structure body 9. For this purpose, on the plane of the same cell unit 8, the arrangement and the cross-sectional area of the fuel fluid supply internal common manifold 41A (the supply distribution and the flow amount) and the arrangement and the cross-sectional area of the fuel fluid exhaust internal common manifold 41B (the exhaust distribution and the flow amount) are in equilibrium. The arrangement and the cross-sectional area of the cooling medium supply internal common manifold 42A (the supply distribution and the flow amount) and the arrangement and the cross-sectional area of the cooling medium exhaust internal common manifold 42B (the exhaust distribution and the flow amount) are in equilibrium. The arrangement and the cross-sectional area of the oxidizing fluid supply internal common manifold 43A (the supply distribution and the flow amount) and the arrangement and the cross-sectional area of the oxidizing fluid exhaust internal common manifold 43B (the exhaust distribution and the flow amount) are in equilibrium.

Further, although it is best that the supply flow and the exhaust flow for various fluids are in the state of equilibrium, however, it goes without saying that the fuel cell of the present invention can generate power even if the equilibrium is not extorted.

The edge structure that terminates the extension of openings in the 2 directions of A-axis is the edge structure installed along the direction B. The edge structure that terminates the extension of openings in the 2 directions of A-axis includes the edge structure of internal common manifold (not illustrated) and the edge structures of external common manifolds 80, 90. The edge structure of the internal common manifold, although not illustrated, is installed at the 2 edges along the 2 directions of B-axis of the cell stack structure body 9. Fig. 14 illustrates the edge structures of the external common manifold 80, 90 disposed at the 2 edges along the 2 directions of B-axis of the endplate 102. The edge structure that terminates the extension of openings in the 2 directions of A-axis is formed by halving the cross sections of the original shapes of the pipe for connecting with external BOP 61, 62, 63 and the pipe for connecting with internal common manifold 71, 72, 73 at the intermediate portion. As a result of this, the cross-sectional areas of the pipe for connecting with external BOP 91, 92, 93 and the pipe for connecting with internal common manifold 81, 82, 83 at the edge portion are a half of the cross-sectional areas of the fully-shaped pipes at the intermediate portion. In the plane of the same cell unit 8, the arrangements and the cross-sectional areas of supply internal common manifolds for various fluids 41A, 42A, 43A (at the edge portion and the intermediate portion) that correspond to the supply flow distribution and the total flow amount, and the arrangements and the cross-sectional areas of exhaust internal common manifolds for various fluids 41B, 42B, 43B (at the edge portion and the intermediate portion) that correspond to the exhaust flow distribution and the total flow amount are in equilibrium.

The edge structure that terminates the extension of openings in the 2 directions of B-axis is the edge structure installed along the direction A. The edge structure that terminates the extension of openings in the 2 directions of B-axis includes the edge structure of internal common manifold (not illustrated) and the edge structures of external common manifold 80, 90. The edge structure of the internal common manifolds, although not illustrated, is installed at the 2 edges along the direction A of the cell stack structure body 9. Fig. 14 illustrates the edge structures of the external common manifolds 80, 90 disposed at the 2 edges along the direction A in the endplate 102.

The edge structure that terminates the extension of openings in the 2 directions of B-axis sets a basic segment 18 for maintaining the power generating function as a reference. The basic segment 18 provides the internal common manifolds 41, 42, 43 and the pipes for connecting with internal common manifold 71, 72, 73, for fuel fluid, cooling medium and oxidizing fluid, in B direction. Two edges are installed along the direction A of the cell stack structure body 9 and the endplate 102 for terminating the extension of openings in the 2 directions of B-axis by setting the dividing line having an integer multiple of the basic segment 18 as a reference. According to the example shown in Fig. 14, the basic segment 18 includes a pipe for connecting with internal common manifold for fuel fluid 71, a pipe for connecting with internal common manifold for cooling medium 72, and a pipe for connecting with internal common manifold for oxidizing fluid 73.

Without the edge structure, the supply and exhaust balance of various fluids will be disrupted near to the edge. The local reaction is enhanced. A significant damage is put on the catalyst layer. The damage will lead to an extensive decline in durability.

In the first and second embodiments described above, it is desired that the length of the internal common manifolds 41, 42, 43 is suppressed as least as possible along the direction C while stacking as many stacks as much as possible (that is, to make it flat). In this way, the stacked-type fuel cell of the present invention can be mounted to a limited space such as engine room of a vehicle. In addition to that, a compressor for sending the oxidizing fluid at high pressure is not always required so that the manufacturing cost can be reduced. The stacked-type fuel cell is light in weight so that it can be utilized as a power source in aero plane.

Also, based on the notion of the supply and exhaust balance, the layouts of the internal common manifolds 41, 42, 43 and the external common manifolds 51, 52, 53 for the first and second embodiments of the present invention are not limited to these examples. The present invention can be embodied in various forms within the scope not deviating the principle of the invention.

The various fluid flows within the stacked-type fuel cell according to the first and second embodiments of the present invention configured accordingly may be confirmed experimentally by flow simulation.

### [Mechanism of the stacked-type fuel cell]

The mechanism of the stacked-type fuel cell is described below. Hydrogen fluid is supplied to an anode (called fuel electrode) and a proton is removed from the supplied hydrogen fluid, with an aid of the catalyst, and the electron is transferred to the external circuit. Here, the hydrogen is converted to hydrogen ion (called proton). Meanwhile, an oxygen is supplied to a cathode (called air electrode). The oxygen reacts with the proton permeating through the electrolyte membrane and the electron from the external circuit to generate water.

### [Effects of the Present Invention]

As already described in the structural concept section, the output density can be increased by changing the effective area of the cell unit 8 without relying on the power voltage. Also, the output voltage of the fuel cell can be determined by changing the number of cell units 8 for stacking. Further, the output density and the energy density can be increased by significantly decreasing the volume of the cell stack structure body 9 without changing the output voltage, by using a thin cell unit 8. Furthermore, the height of the channel and the pitch for stacking the cell units 8 are reduced so that number of stacking can be increased, and a fluid machinery "compressor" used to circulate the oxidizing fluid at high pressure is not always necessary. The reasons for applying the repeating basic unit 16 (see Fig. 3) that has the regularity of Bravais lattice as such in designing the layout of the openings 11, 12, 13 of the cell units 8 to constitute the internal common manifolds 41, 42, 43 are: supplying and exhausting various fluids uniformly throughout the cell unit 8; improving flow distribution by suppressing the pressure loss of the flow; and using the cell unit area 8 effectively. By setting the supply openings 11A, 12A, 13A and the exhaust openings 11B 12B, 13B for the same kind (the fuel fluid, the cooling medium or the oxidizing fluid) closest to one another along the channel direction, the fluid flow of the same kind will not cease its flow on its way, and this is effective in improving the fuel cell reaction. All catalyst reaction area will be maximized.

According to the layouts for the internal common manifolds 41, 42, 43 and the external common manifolds 51, 52, 53, the occurrence of uneven flow can be suppressed. Further, they can be constructed compactly so that a small-sized and a high output stacked-type fuel cell is provided for an efficient power generation. Furthermore, the stacked-type fuel cell being small occupies less space so that the degree of freedom in the layout inside the engine room is increased. The drift flow within the internal common manifolds 41, 42, 43 in the stacking direction is suppressed so that supplying and exhausting of various fluids become uniform even more. The pressure loss in the flow is reduced so that a favorable flow distribution is achieved. Also, this layout can cope with the variance in manufacturing at assembly.

The structures of the external common manifolds 51, 52, 53 and the internal common manifolds 41, 42, 43 are simple so that they can readily be formed by using the cutting processing. The manufacturing of the endplates 101, 102 is simplified. It can be manufactured at a low cost compared to the case of having to weld many parts for assembling. The small-sized stacked-type fuel cell is excellent for loading to vehicle, and excellent in terms of productivity and cost. By designing the structure accordingly, the flow resistances of various fluids are reduced so that the fluids can flow throughout the plane of the cell unit 8, without having to install any special external apparatus to the stacked-type fuel cell. On top of the notion of the fluid flow, a local stress put on the electrolyte membrane 1 is eliminated that the concentrated internal stress is prominently reduced, making it capable to achieve a prolonged lifetime of the cell unit stacked-type fuel cell.

### Industrial Applicability

The embodiments of the present invention can be utilized as the fuel cell for vehicle.

The present invention is not limited to the first and second embodiments, but it can be realized at various structure within the scope not deviating from the purport. For example, the technical feature mentioned in the first and second embodiments in the description of the present invention, can appropriately be changed, combined for solving all or part of the problems and effects mentioned above.

## Claims

1. A cell unit, comprising: a first separator and a second separator opposite to each other; and a membrane electrode assembly laminated between the first and the second separators; wherein the cell unit includes a plurality of fuel fluid openings, a plurality of cooling medium openings, and a plurality of oxidizing fluid openings of the first separator, the second separator, and the membrane electrode assembly, that pass through an extension plane of the cell unit; wherein at least one of the fuel fluid openings, at least one of the cooling medium openings, and at least one of the oxidizing fluid openings, are arranged at a center area of the cell unit.

2. The cell unit according to claim 1, wherein the plurality of fuel fluid openings, the plurality of cooling medium openings, and the plurality of oxidizing fluid openings configured with a plurality of basic units periodically repeated throughout the cell unit or periodically repeated with fluctuation to some extent; and that include an edge structure for terminating the periodic repetition of the basic units at edge portions other than the center area.

3. The cell unit according to claim 1, wherein the fuel fluid openings, the cooling medium openings, and the oxidizing fluid openings that provided with their respective supply openings and exhaust openings.

4. The cell unit according to claim 2, wherein the basic unit includes at least two fuel fluid openings, at least two cooling medium openings, and at least two oxidizing fluid openings.

5. The cell unit according to claim 2, wherein the basic units include the same or the different shapes, positions, and sizes of the various fluid openings, or their combinations, as follows:
the shapes, positions, and sizes of the fuel fluid openings are the same or different, or their combinations;
the shapes, positions, and sizes of the cooling medium openings are the same or different, or their combinations; and
the shapes, positions, and sizes of the oxidizing fluid openings are the same or different, or their combinations.

6. The cell unit according to claim 2, wherein the basic unit is a unit having a minimum repeating arrangement periodicity of pattern of the openings, for which a pattern of openings is formed by a two-dimensional Bravais lattice arrangement.

7. The cell unit according to claim 4 comprises at least two of the fuel fluid openings, at least two of the cooling medium openings, and at least two of the oxidizing fluid openings, that are provided with their respective supply openings and exhaust openings.

8. The cell unit according to claim 4 comprises at least two fuel fluid openings including a multiple fuel fluid openings or a partial fuel fluid openings; at least two cooling medium openings including a multiple cooling medium openings or a partial cooling medium openings; and at least two oxidizing fluid openings including a multiple oxidizing fluid openings or a partial oxidizing fluid openings.

9. The cell unit according to claim 7 comprises a minimum power generating element that includes approximately one quarter of the fuel fluid supply opening, approximately one quarter of the fuel fluid exhaust opening, approximately one quarter of the oxidizing fluid supply opening, approximately one quarter of the oxidizing fluid exhaust opening, approximately half of the cooling medium supply opening, and approximately half of the cooling medium exhaust opening.

10. The cell unit according to claim 9, wherein the basic unit and the minimum power generating unit are geometrically similar.

11. The cell unit according to claims 3 and 8 **characterized in that** the supply opening and exhaust openings for the same fluid are arranged to a first row and a second row in a complementary relationship with one another, wherein the first row does not include the supply opening and exhaust openings of the same fluid both in the same row, and wherein the second row does not include the supply opening and exhaust openings of the same fluid both in the same row.

12. The cell unit according to claims 3 and 8, wherein the first row includes the supply openings only, and the second row includes the exhaust openings only, wherein the first row and the second row are alternately arranged in the fluid channel direction.

13. The cell unit according to claim 1, wherein the membrane electrode assembly of the cell unit comprises a first gas diffusion layer, a first catalyst layer, an electrolyte membrane, a second catalyst layer, and a second gas diffusion layer.

14. A cell stack structure body, having the cell unit of any one of claims 1 to 13, including the cell stack structure body which is stacked by a plurality of cell units, wherein the fuel fluid openings, the cooling medium openings, and the oxidizing fluid openings of the cell units are respectively piled to form respective internal common manifolds within the cell stack structure body, and wherein the internal common manifolds supply and exhaust the fuel fluid, the cooling medium and the oxidizing fluid to/from the plurality of cell units.

15. The cell stack structure body according to claim 14, wherein the internal common manifolds are basically formed perpendicular to a plane of the plurality of cell units and/or formed at the acute inclined angles to the plane.

16. The cell stack structure body according to claim 14, which comprises the followings;
a first channel, arranged inside each cell unit, for supplying fuel fluid flow;
a second channel, arranged inside each cell unit, for supplying oxidizing fluid flow; and
a third channel, arranged between adjacent cell units, for supplying cooling medium flow;
wherein the first channel, the second channel, and the third channel are connected to their respective internal common manifolds, and wherein each cell unit is provided with a sealing material for controlling flows of the first channel, the second channel, and the third channel.

17. The cell stack structure body according to claim 14 formed by stacking the plurality of cell units, wherein the adjacent cell units have a pre-determined rotation angle of 0 degree or more than 0 degree.

18. The cell stack structure body according to claim 14 formed by stacking the plurality of cell units, wherein the fuel fluid openings, the cooling medium openings, and the oxidizing fluid openings have the same shapes and sizes, respectively, to be aligned coherently in a straight line or/or the curved lines, for forming the internal common manifolds.

19. The cell stack structure body according to claim 14 formed by stacking the plurality of cell units, wherein the internal common manifolds have slight displacement in their shapes and sizes, respectively, to be aligned in a straight line and/or curved lines; for forming the internal common manifolds.

20. A fuel cell having the cell stack structure body of any one of claims 14 to 19, comprising: a first end plate; and a second end plate; wherein the first end plate and the second end plate have external common manifolds corresponding to the internal common manifolds, for supplying and exhausting the fuel fluid, the cooling medium and the oxidizing fluid, and for sandwiching the cell stack structure body from both sides.

21. The fuel cell according to claim 20, wherein the external common manifolds include a plurality of first pipes connected to the external power generation auxiliary system, and a plurality of second pipes connected to the internal common manifolds.

22. The fuel cell according to claim 20, wherein the external common manifolds have basic units corresponding to the internal common manifolds, and the edge structure for terminating the periodic repetition of the basic units.

23. The fuel cell according to claim 21, wherein the plurality of first pipes are arranged along the aligned direction of the openings, wherein the plurality of first pipes are provided in parallel or semi-parallel to each other so as not to come in contact with one another.

24. The fuel cell according to claim 21, wherein the plurality of second pipes are arranged along the stacking direction of the cell units, extend the internal common manifolds, and are installed so as not to come in contact with one another.

25. The fuel cell according to claim 21, wherein the plurality of first pipes and the plurality of the second pipes are connected perpendicular to and/or at the acute inclined angles to each other, wherein the second pipes penetrate at the center or at a vicinity of the center of the first pipes, or penetrate at the edge or near to the edge of the first pipes, or penetrate between the center or the edge of the first pipes, viewing from the cross section of the first pipes.

26. The fuel cell according to claim 21, wherein the second pipe increases width size of a first axis at the inner plane of the cell unit stepwisely from the first zone positioned most apart from the cell stack structure body, via the second zone, to the third zone positioned closest to the cell stack structure body;
wherein the first pipe connected to the external power generation auxiliary system for the cooling medium is set back with respect to a reference line by taking the width size of the second pipe for connecting to the internal common manifold of the fuel fluid positioned at the first zone as the reference line, and
wherein the first pipe connected to the external power generation auxiliary system for the oxidizing fluid is set back with respect to a reference line by taking the second pipe for connecting to the internal common manifold of the cooling medium positioned at the second zone as the reference line.

27. The fuel cell according to claim 21, wherein the edge structure of the internal common manifolds and the external common manifolds, as for the edge structure that terminates a first axis extension of the openings in the cell unit, is provided so that the cross-sectional areas of the internal common manifolds and the external common manifolds at the edge portions are half or approximately half of the cross sectional areas of the internal common manifolds and the external common manifolds at the intermediate portion; and as for the edge structure that terminates a second axis extension of the openings in the cell unit, the extension to the second axis of the openings is terminated by
setting the dividing line having an integer multiple of the basic segment as a reference, based on the basic segment provided with pipes for connecting to the internal common manifolds and the internal common manifolds of the fuel fluid, the cooling medium and the oxidizing fluid.

28. The fuel cell according to claim 22, wherein the supply external common manifolds and the exhaust external common manifolds for any one of the fuel fluid, the cooling medium and the oxidizing fluid is installed to the same end plate, alternatively, they are installed separately to the two end plates.
